# EUROPEAN PATENT APPLICATION

(11) **EP 4 580 024 A1**
(43) Date of publication of application: **02.07.2025**
(21) Application number: 24220991.4
(22) Date of filing: 18.12.2024
(51) Int. Cl.: H02M 3/158, H02M 7/15, H02M 7/23

(54) **POWER CONVERSION DEVICE AND CHARGING PILE**

(30) Priority: 19.12.2023 CN 202311762213
(71) Applicant: Huawei Digital Power Technologies Co., Ltd., Shenzhen, Guangdong 518043 (CN)
(72) Inventor: YU, Kun, Shenzhen, Guangdong 518043 (CN); CAI, Yi, Shenzhen, Guangdong 518043 (CN); LI, Fei, Shenzhen, Guangdong 518043 (CN); MIAO, Zhengping, Shenzhen, Guangdong 518043 (CN)
(74) Representative: Maiwald GmbH

(57) **Abstract**

A power conversion device and a charging pile are disclosed. The power conversion device includes a plurality of power converters and a plurality of leakage current sampling circuits. The power conversion device is configured to: when a sum of leakage currents of the plurality of power converters is greater than a first current threshold, turn off at least some of first power converters, so that a sum of leakage currents of the plurality of power converters is less than or equal to the first current threshold. The first power converter is a power converter whose leakage current is greater than a second current threshold among the plurality of power converters. The first current threshold is a maximum leakage current allowed by the power conversion device, and the second current threshold is a maximum leakage current allowed by the first power converter.

## Description

### TECHNICAL FIELD

This application relates to the charging field, and in particular, to a power conversion device and a charging pile.

### BACKGROUND

A charging pile usually includes a plurality of parallel AC-DC power conversion apparatuses. When a non-isolated topology is used for the AC-DC power conversion apparatuses, a system needs to have a leakage current protection function, to ensure electrical safety.

Currently, a leakage current detection method is mainly as follows: Before parallel connection nodes of the plurality of AC-DC power conversion apparatuses are detected, a system leakage current is sampled by using a leakage current transformer, and the system may be directly protected by using the detected leakage current. Although this detection solution is simple and reliable, a specific location of failure cannot be identified in this leakage current detection method. When a failure occurs in the system, the entire system needs to be shut down for protection, leading to poor redundancy of the system.

### SUMMARY

This application provides a power conversion device and a charging pile. The power conversion device may accurately identify a location of failure. Therefore, only a faulty component in the power conversion device needs to be turned off, and other normal components may still continue to operate. In this way, the power conversion device is protected, and system redundancy can be improved.

According to a first aspect, a power conversion device is provided. The power conversion device includes a plurality of power converters and a plurality of leakage current sampling circuits. An input end of each power converter is configured to connect to a power supply, and an output end of each power converter is configured to connect to a load. The plurality of power converters are connected in parallel. The plurality of leakage current sampling circuits are in a one-to-one correspondence with the plurality of power converters. Each leakage current sampling circuit is configured to sample a leakage current of a corresponding power converter. The power conversion device is configured to: when a sum of leakage currents of the plurality of power converters is greater than a first current threshold, turn off at least some of first power converters, so that a sum of leakage currents of the plurality of power converters is less than or equal to the first current threshold. The first power converter is a power converter whose leakage current is greater than a second current threshold among the plurality of power converters. The first current threshold is a maximum leakage current allowed by the power conversion device, and the second current threshold is a maximum leakage current allowed by the first power converter.

In this embodiment of this application, each power converter corresponds to one leakage current sampling circuit. In other words, one leakage current sampling circuit captures a leakage current of one power converter. The power conversion device may accurately identify a location of failure based on a leakage current of each power converter and the sum of the leakage currents of the plurality of power converters. Therefore, only a faulty component in the power conversion device needs to be turned off, and other normal components may still continue to operate. In this way, the power conversion device is protected. Specifically, when the sum of the leakage currents of the plurality of power converters is greater than the first current threshold, the first power converter whose leakage current is greater than the second current threshold among the plurality of power converters is turned off, so that a leakage current of the power conversion device meets an operation requirement. This can improve safety of the power conversion device. In addition, because each power converter supports independent leakage current detection, when one of the power converters is turned off, normal operation of other power converters is not affected, in other words, the other power converters may still continue to operate. This can improve redundancy of the power conversion device.

In this embodiment of this application, when the sum of the leakage currents of the plurality of power converters is greater than the first current threshold, at least some of the first power converters are turned off. In other words, when the sum of the leakage currents of the plurality of power converters is greater than the first current threshold, some of the first power converters may be turned off, or all of the first power converters may be turned off. In an implementation, the power conversion device may turn off some of the first power converters, and a sum of leakage currents of power converters operating in the power conversion device is less than the maximum leakage current allowed by the power conversion device, so that a leakage current of the power conversion device can meet an operation requirement. This can improve safety of the power conversion device. In another implementation, the power conversion device may turn off all of the first power converters, and a sum of leakage currents of power converters in the power conversion device other than the first power converters is less than the maximum leakage current allowed by the power conversion device, so that a leakage current of the power conversion device can meet an operation requirement. This can improve safety of the power conversion device. In addition, in the another implementation, because the power conversion device turns off all power converters whose leakage currents are greater than a leakage current allowed by the power conversion device, bodily harm can be avoided, and personal safety can be ensured.

In addition, when a system needs to be expanded, for example, a quantity of parallel power converters is increased, only a quantity of leakage current sampling circuits needs to be increased, and a leakage current transformer in an added leakage current sampling circuit only needs to be selected based on a current specification of a corresponding power converter. To be specific, the leakage current transformer in the added leakage current sampling circuit only needs to have a capability of capturing a maximum leakage current of a corresponding power converter. Compared with a case in which one leakage current transformer is used to capture leakage currents of all power converters in a system, in this embodiment of this application, selection of a leakage current transformer in a leakage current sampling circuit is not greatly limited, and costs can also be reduced. In addition, when parallel power converters are added to the system, power converters may be directly combined, or power converters with different power levels may even be combined. This can improve flexibility and scalability of a parallel system.

With reference to the first aspect, in a possible design, the power conversion device is further configured to: when a sum of leakage currents of the plurality of power converters is less than or equal to the first current threshold, turn off the first power converter; or when a sum of leakage currents of the plurality of power converters is less than or equal to the first current threshold, skip turning off the first power converter.

In this embodiment of this application, when the sum of the leakage currents of the plurality of power converters is less than or equal to the first current threshold, because the sum of the leakage currents of the plurality of power converters is less than the maximum leakage current allowed by the power conversion device, even if a leakage current of the first power converter is greater than the maximum leakage current allowed by the first power converter, a leakage current of the power conversion device meets a corresponding safety regulation, and the first power converter may not be turned off.

Alternatively, when the sum of the leakage currents of the plurality of power converters is less than or equal to the first current threshold, although the sum of the leakage currents of the plurality of power converters is less than the maximum leakage current allowed by the power conversion device, a leakage current of the first power converter is greater than the maximum leakage current allowed by the first power converter, and when insulation between a metal housing of the first power converter and an internal charged component fails, if the housing of the first power converter is not grounded and a human body is in contact with the housing, the leakage current flows into the ground through the human body, causing bodily harm. Therefore, in this case, the first power converter may be turned off, to avoid bodily harm and ensure personal safety.

With reference to the first aspect, in a possible design, the power conversion device further includes a leakage current bus and an equalization circuit, and the leakage current sampling circuit includes a leakage current transformer. The leakage current transformer is configured to capture a leakage current of a corresponding power converter. An input end of the equalization circuit is connected to a plurality of leakage current transformers. An output end of the equalization circuit is connected to the leakage current bus. The equalization circuit is configured to average output values of the plurality of leakage current transformers and then output an average value. The power conversion device is configured to calculate a product of a leakage current corresponding to a voltage of the leakage current bus and a quantity of the plurality of power converters, to obtain the sum of the leakage currents of the plurality of power converters.

In this embodiment of this application, the equalization circuit averages the output values of the plurality of leakage current transformers and then outputs the average value, and the output end of the equalization circuit is connected to the leakage current bus. Therefore, a voltage value of the leakage current bus is an average value of sums of voltage values output by the plurality of leakage current transformers. The power conversion device only needs to derive a corresponding leakage current based on the voltage value of the leakage current bus, and multiply the leakage current by the quantity of the plurality of power converters to obtain the sum of the leakage currents of the plurality of power converters. In this way, even if the power conversion device includes a large quantity of power converters, the power conversion device can obtain the sum of the leakage currents of the plurality of power converters based only on the product of the leakage current corresponding to the voltage of the leakage current bus and the quantity of the plurality of power converters. This can reduce complexity of calculation.

With reference to the first aspect, in a possible design, the equalization circuit includes a plurality of equalization resistors and a plurality of switch circuits, and each leakage current transformer is connected to the leakage current bus through one equalization resistor and one switch circuit that are connected in series.

In this embodiment of this application, each leakage current transformer is connected to the leakage current bus through one equalization resistor and one switch circuit that are connected in series. In this way, after an output value of each leakage current transformer passes through the equalization circuit, a value transmitted to the leakage current bus is an average value of sums of output values of the plurality of leakage current transformers. This helps the power conversion device calculate a sum of leakage currents of all power converters, to protect the power conversion device.

With reference to the first aspect, in a possible design, the equalization circuit further includes a plurality of first operational amplifiers. A non-inverting input end of each first operational amplifier is connected to a corresponding leakage current transformer. An inverting input end of each first operational amplifier is connected to an output end of the first operational amplifier. An output end of each first operational amplifier is connected to one end of the equalization resistor. The other end of the equalization resistor is connected to the leakage current bus through the switch circuit.

In this embodiment of this application, the first operational amplifier is intended to isolate a circuit connected to an input end of the first operational amplifier from a circuit connected to an output end of the first operational amplifier. In other words, the circuit connected to the input end of the first operational amplifier and the circuit connected to the output end of the first operational amplifier do not affect each other. In this way, even if a node voltage in the circuit fluctuates, impact on a voltage value output by each leakage current transformer or a voltage value of the leakage current bus is small. This helps the power conversion device accurately obtain a leakage current of each power converter and a sum of all leakage currents. Further, this can improve accuracy of protecting the power conversion device.

With reference to the first aspect, in a possible design, the switch circuit includes two switching transistors, a current-limiting resistor, a first voltage source, and a drive circuit. One switching transistor is connected in series to a connection line connecting the equalization resistor and the leakage current bus, and a base of the switching transistor is grounded through the other switching transistor. The first voltage source is connected to a connection point between the two switching transistors through the current-limiting resistor. The drive circuit is connected to a base of the other switching transistor.

In this embodiment of this application, the switch circuit includes the two switching transistors, the current-limiting resistor, the first voltage source, and the drive circuit, and the drive circuit outputs different signals to control turn-on or turn-off of the switching transistors, to determine whether an output value of a leakage current transformer is to be transmitted to the leakage current bus. Particularly, when one or more power converters stop operating, the drive circuit may output a high level, and control a switching transistor connected in series to the connection line connecting the equalization resistor and the leakage current bus to be turned off, so that an output value of a leakage current transformer corresponding to the power converter is not transmitted to the leakage current bus. This can avoid impact of the output value of the leakage current transformer on a system leakage current, and help the power conversion device obtain an accurate system leakage current. Further, this can improve accuracy of protecting the power conversion device.

With reference to the first aspect, in a possible design, the switch circuit further includes a voltage-division resistor. One end of the voltage-division resistor is connected to an emitter of the other switching transistor. The other end of the voltage-division resistor is connected to a connection point between the current-limiting resistor and a collector of the other switching transistor.

In this embodiment of this application, the voltage-division resistor is provided, and the first voltage source is grounded through the current-limiting resistor and the voltage-division resistor. Therefore, if a resistance of the voltage-division resistor is far greater than a resistance of the current-limiting resistor, the voltage-division resistor bears a large part of a voltage output by the first voltage source. In this way, a base voltage of one switching transistor can be reduced, to reduce a risk of damage to the switching transistor.

With reference to the first aspect, in a possible design, the power conversion device further includes a plurality of controllers, the leakage current sampling circuit further includes a plurality of voltage sampling circuits, and the plurality of voltage sampling circuits include a first voltage sampling circuit and a plurality of second voltage sampling circuits. The plurality of controllers are in a one-to-one correspondence with the plurality of power converters, and each controller is configured to control a corresponding power converter. Input ends of the plurality of first voltage sampling circuits are connected to the leakage current bus, an output end of each first voltage sampling circuit is connected to the controller in a one-to-one correspondence, and each first voltage sampling circuit is configured to capture a voltage value of the leakage current bus. An input end of each second voltage sampling circuit is connected to a connection point between a corresponding leakage current transformer and the equalization circuit, an output end of each second voltage sampling circuit is connected to the controller in a one-to-one correspondence, and each second voltage sampling circuit is configured to capture a voltage value at a connection point between a corresponding leakage current transformer and the equalization circuit.

In this embodiment of this application, each controller is connected to an output end of a first voltage sampling circuit, and each first voltage sampling circuit is configured to capture a voltage value of the leakage current bus, so that each controller can obtain the voltage value of the leakage current bus. In addition, each controller is connected to an output end of a corresponding second voltage sampling circuit, and each second voltage sampling circuit is configured to capture a voltage value of a connection point between a corresponding leakage current transformer and the equalization circuit, so that each controller can obtain a voltage value output by a corresponding leakage current transformer. In this way, each controller can obtain a voltage value of a corresponding leakage current transformer and a voltage value of the leakage current bus. Further, each controller may derive a leakage current of a corresponding power converter and a sum of leakage currents of all power converters, to protect the power conversion device.

With reference to the first aspect, in a possible design, each voltage sampling circuit includes a second operational amplifier, a first resistor, and a filter capacitor. A non-inverting input end of the second operational amplifier is an input end of the voltage sampling circuit. An inverting input end of the second operational amplifier is connected to an output end of the second operational amplifier. The output end of the second operational amplifier is connected to one end of the first resistor. The other end of the first resistor is connected to one end of the filter capacitor. The other end of the filter capacitor is grounded. A connection point between the other end of the first resistor and the filter capacitor is an output end of the voltage sampling circuit.

In this embodiment of this application, the non-inverting input end of the second operational amplifier is the input end of the voltage sampling circuit, and the inverting input end of the second operational amplifier is connected to the output end of the second operational amplifier. Therefore, the output end of the second operational amplifier outputs a voltage value of the leakage current bus. In addition, the first resistor and the filter capacitor may filter a voltage output by the output end of the first operational amplifier, so that a voltage value captured by the controller is accurate. This helps the controller accurately control a status of a corresponding power converter. In addition, the first resistor may further limit a current. This can reduce a current flowing into a pin of a chip of the controller, to reduce a risk of damage to the pin of the chip.

With reference to the first aspect, in a possible design, the leakage current sampling circuit further includes a calibration circuit. The calibration circuit is connected in series between the leakage current transformer and the equalization circuit. During initial operation of the power conversion device, each calibration circuit is configured to make output values of all the first voltage sampling circuits consistent when an input value of each leakage current transformer is a preset value.

In this embodiment of this application, there is a deviation between a leakage current captured by each leakage current transformer and a corresponding voltage value. Even if leakage current transformers capture a same leakage current, output voltage values may still be inconsistent. Therefore, in this embodiment of this application, the calibration circuit is designed. Each calibration circuit is configured to: during initial operation of the power conversion device, make output values of all the first voltage sampling circuits consistent when an input value of each leakage current transformer is a preset value. This can reduce a deviation, and help the power conversion device accurately obtain a leakage current of each power converter and a sum of all leakage currents. Further, this can improve accuracy of protecting the power conversion device.

With reference to the first aspect, in a possible design, the calibration circuit includes a second resistor, a third resistor, a fourth resistor, a fifth resistor, a third operational amplifier, and a second voltage source, and resistances of all the resistors are equal. A non-inverting input end of the third operational amplifier is connected to the second voltage source through the second resistor. The non-inverting input end of the third operational amplifier is connected to the leakage current transformer through the third resistor. One end of the fourth resistor is connected to an output end of the third operational amplifier. The other end of the fourth resistor is grounded through the fifth resistor. An inverting input end of the third operational amplifier is connected to a connection point between the fourth resistor and the fifth resistor.

In this embodiment of this application, the calibration circuit includes four resistors, the third operational amplifier, and the second voltage source, and resistances of all the resistors are equal. A second voltage source connected to each leakage current transformer may provide a corresponding voltage according to a requirement, so that output values of all the first voltage sampling circuits are consistent when an input value of each leakage current transformer is a preset value. This can reduce a deviation, and help the power conversion device accurately obtain a leakage current of each power converter and a sum of all leakage currents. Further, this can improve accuracy of protecting the power conversion device.

With reference to the first aspect, in a possible design, the leakage current sampling circuit includes a leakage current transformer, and the power conversion device further includes a summation circuit and a plurality of controllers. The plurality of controllers are in a one-to-one correspondence with the plurality of power converters, and each controller is configured to control a corresponding power converter. The summation circuit is configured to perform summation on output values of all leakage current transformers. Each controller is configured to: obtain an output value of a corresponding leakage current transformer and an output value of the summation circuit; and turn on or turn off a corresponding power converter based on the output value of the leakage current transformer and the output value of the summation circuit.

In this embodiment of this application, the summation circuit in the power conversion device performs summation on output values of a plurality of leakage current transformers, so that each controller can control turn-on or turn-off of a corresponding power converter based on the output value of the leakage current transformer and the output value of the summation circuit. In this way, the power conversion device can be protected. In addition, in this embodiment of this application, the summation circuit performs summation on the output values of all the leakage current transformers, and the summation circuit has a simple design, is easy to implement, and has high operation efficiency.

With reference to the first aspect, in a possible design, the leakage current sampling circuit includes a leakage current transformer, and the power conversion device further includes a plurality of controllers. The plurality of controllers are in a one-to-one correspondence with the plurality of power converters, and each controller is configured to control a corresponding power converter. Each controller is configured to: obtain output values of all leakage current transformers, and calculate a sum of the output values of all the leakage current transformers; and turn on or turn off a corresponding power converter based on the output values of the leakage current transformers and the sum of the output values of all the leakage current transformers.

In this embodiment of this application, each controller may obtain the output values of all the leakage current transformers and calculate the sum of the output values of all the leakage current transformers, so that each controller can control turn-on or turn-off of a corresponding power converter based on the output values of the leakage current transformers and the sum of the output values of all the leakage current transformers. In this way, the power conversion device can be protected. In addition, in this embodiment of this application, each controller independently calculates the sum of the output values of all the leakage current transformers. To be specific, each controller independently performs a summation operation, without affecting each other.

According to a second aspect, a charging pile is provided. The charging pile includes the power conversion device according to any one of the first aspect or the possible designs of the first aspect, and each power converter is an AC-DC power converter.

With reference to the second aspect, in a possible design, the charging pile further includes a direct current bus and a plurality of DC-DC power converters, and the plurality of AC-DC power converters are connected to the plurality of DC-DC power converters through the direct current bus.

For technical effect that can be achieved by any possible design of the second aspect, refer to descriptions of technical effect that can be achieved by any possible design of the first aspect. Details are not described herein again.

### BRIEF DESCRIPTION OF DRAWINGS

FIG. 1 is a diagram of a structure of a charging system according to an embodiment of this application;
FIG. 2 is a diagram of a structure of the charging system shown in FIG. 1; and
FIG. 3 to FIG. 17 are diagrams of a power conversion device according to an embodiment of this application.

### DESCRIPTION OF EMBODIMENTS

The following describes technical solutions of this application with reference to accompanying drawings.

In descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation. In addition, in descriptions of embodiments, "a plurality of" means two or more, unless otherwise specified.

For ease of understanding, the following first briefly describes terms in this application.

A leakage current may be simply understood as a current generated by electric leakage. A three-phase three-wire circuit is used as an example. In a normal case, a three-phase phase wire is the only path in the circuit, and the three phases include a phase A, a phase B, and a phase C. If electric leakage occurs in a phase, for example, electric leakage occurs in the phase A, a loop is formed between the phase A and the ground, and a current in the loop between the phase A and the ground is a leakage current.

This application may be used in a system in which a power supply apparatus and a load charge each other through a power distribution matrix. For example, in a system including a charging pile and an electric vehicle, the charging pile may charge the electric vehicle by using electric energy that comes from a power grid, and the electric vehicle may also reversely output electric energy of the electric vehicle to the power grid. A charging form of the charging pile is not specifically limited in this application. The charging pile may charge the electric vehicle by using an alternating current, or may charge the electric vehicle by using a direct current. The direct current is used below as an example to describe a process of charging the electric vehicle by the charging pile.

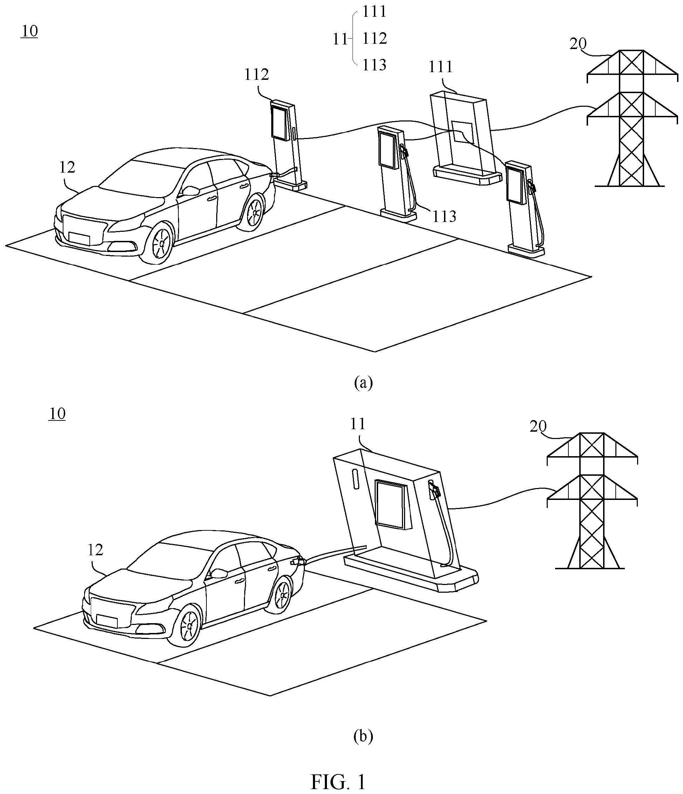

FIG. 1 is a diagram of an example structure of a charging system 10 according to an embodiment of this application.

With reference to (a) in FIG. 1 and (b) in FIG. 1, the charging system 10 may include a charging pile 11 and an electric vehicle 12. The charging pile 11 may be configured to receive an alternating current output by an external power grid 20, convert the alternating current into a stable direct current, and then transmit the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging pile 11 may include a charging apparatus 111, at least one charging terminal 112, and at least one charger 113. The charging apparatus 111 may be electrically connected to the at least one charging terminal 112. The at least one charging terminal 112 may be electrically connected to the at least one charger 113. During specific implementation, one charging terminal 112 may be electrically connected to one or more chargers 113.

The charging apparatus 111 may include a plurality of power conversion apparatuses. The plurality of power conversion apparatuses may convert an alternating current that comes from the external power grid 20 into a stable direct current, and then transmit the stable direct current to the charging terminal 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging terminal 112 transmits the stable direct current to the electric vehicle 12 through the charger 113, to charge the electric vehicle 12.

The charging terminal 112 may include a housing, a human-computer interaction interface, a charging control unit, a metering and billing unit, and the like, and is configured to perform information exchange, energy transmission, metering and billing, and the like with the electric vehicle 12.

The electric vehicle 12 may be a vehicle driven by electric energy. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, in the charging pile 11, a human-computer interaction interface, a charging control unit, a metering and billing unit, and the like may be directly provided in a charging apparatus 111. Therefore, the charging pile 11 may include only the charging apparatus 111 and at least one charger 113 electrically connected to the charging apparatus 111, and does not include a charging terminal 112. A plurality of power conversion apparatuses in the charging apparatus 111 may convert an alternating current that comes from the external power grid 20 into a stable direct current, and then directly transmit the stable direct current to the electric vehicle 12 through the charger 113.

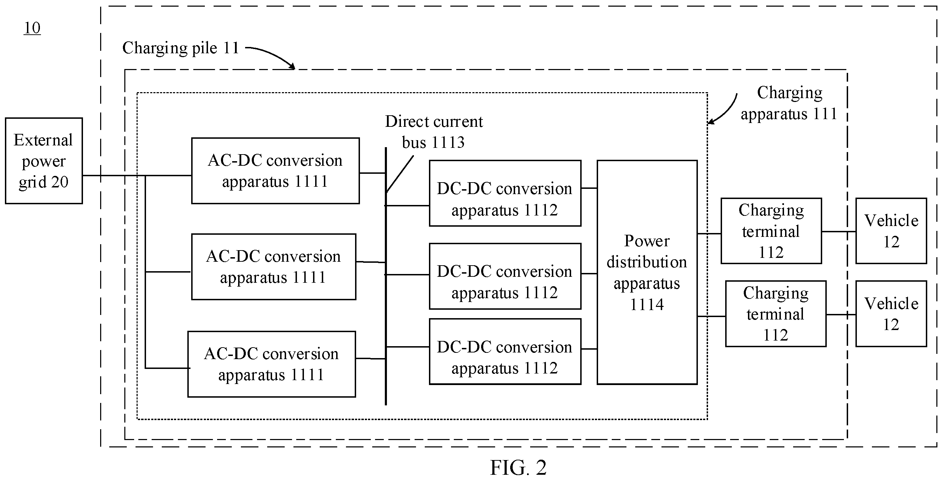

FIG. 2 is a diagram of a structure of the charging system 10 shown in FIG. 1. The charging apparatus 111 may include a plurality of AC-DC conversion apparatuses 1111, a DC-DC conversion apparatus 1112, a direct current bus 1113, and a power distribution apparatus 1114.

Input ends of the plurality of AC-DC conversion apparatuses 1111 may be connected to the external power grid 20, and output ends of the plurality of AC-DC conversion apparatuses 1111 may be connected to the direct current bus 1113. In other words, the plurality of AC-DC conversion apparatuses 1111 may be connected in parallel between the external power grid 20 and the direct current bus 1113. The plurality of AC-DC conversion apparatuses 1111 may be configured to receive an alternating current from the external power grid 20, convert the alternating current into direct currents, and output the direct currents through the direct current bus 1113.

An input end of the DC-DC conversion apparatus 1112 may be connected to the direct current bus 1113, and an output end of the DC-DC conversion apparatus 1112 may be connected to the charging terminal 112 through the power distribution apparatus 1114. The DC-DC conversion apparatus 1112 may receive, through the direct current bus 1113, the direct currents output by the plurality of AC-DC conversion apparatuses 1111, further convert the direct currents into direct currents applicable to the vehicle 12, and then transmit the direct currents to the power distribution apparatus 1114. The power distribution apparatus 1114 may dynamically distribute, based on charging power actually required by the vehicle, the direct currents output by the plurality of DC-DC conversion apparatuses 1112. Distributed charging power is transmitted to the vehicle 12 through the charging terminal 112, to charge the vehicle 12.

As described above, the plurality of AC-DC power conversion apparatuses 1111 may be connected in parallel between the external power grid 20 and the direct current bus 1113. To be specific, the plurality of AC-DC power conversion apparatuses 1111 are connected in parallel to form a system with a high power level. When a non-isolated topology is used for the AC-DC power conversion apparatuses 1111, the system needs to have a leakage current protection function, to ensure electrical safety.

Currently, a leakage current detection method is mainly as follows: Before parallel connection nodes of the plurality of AC-DC power conversion apparatuses 1111 are detected, a system leakage current is sampled by using a leakage current transformer, and the system may be directly protected by using the detected leakage current. Although this detection solution is simple and reliable, a specific location of failure cannot be identified in this leakage current detection method. When a failure occurs in the system, the entire system needs to be shut down for protection, leading to poor redundancy of the system.

Based on this, this application provides a power conversion device. The power conversion device may accurately identify a location of failure. Therefore, only a faulty component in the power conversion device needs to be turned off, and other normal components may still continue to operate. In this way, the power conversion device is protected, and system redundancy can be improved.

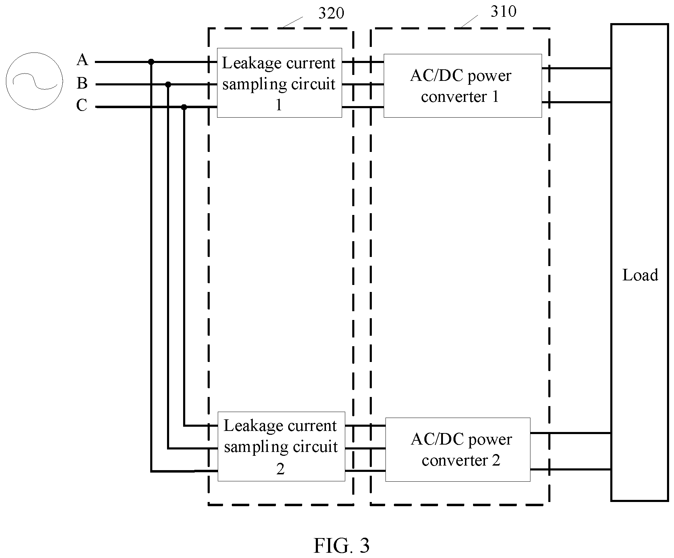

FIG. 3 is a diagram of a power conversion device according to an embodiment of this application.

In an embodiment, the power conversion device includes a plurality of power converters 310 and a plurality of leakage current sampling circuits 320. An input end of each power converter is configured to connect to a power supply, and an output end of each power converter is configured to connect to a load.

The plurality of power converters are connected in parallel. The plurality of leakage current sampling circuits are in a one-to-one correspondence with the plurality of power converters. Each leakage current sampling circuit is configured to sample a leakage current of a corresponding power converter.

The power conversion device is configured to turn on or turn off any power converter based on a leakage current of each power converter and a sum of leakage currents of the plurality of power converters.

In this embodiment of this application, the power converter may be an AC/DC power converter or a DC/DC converter. For ease of description, an example in which the power converter is an AC/DC converter is used below for description.

FIG. 3 shows two AC/DC power converters: an AC/DC power converter 1 and an AC/DC power converter 2. The two AC/DC power converters are connected in parallel. Correspondingly, the power conversion device further includes two leakage current sampling circuits: a leakage current sampling circuit 1 and a leakage current sampling circuit 2. The leakage current sampling circuit 1 captures a leakage current of the AC/DC power converter 1. The leakage current sampling circuit 2 captures a leakage current of the AC/DC power converter 2.

In this embodiment of this application, each leakage current sampling circuit captures a leakage current of a corresponding power converter, and a sum of leakage currents of all power converters may be obtained based on the leakage current captured by each leakage current sampling circuit. For any power converter, the power converter may control turn-on or turn-off of the power converter based on a leakage current of the power converter and the sum of the leakage currents of all the power converters.

For example, FIG. 3 is still used as an example. The leakage current sampling circuit 1 captures a leakage current of the AC/DC power converter 1, and the leakage current sampling circuit 2 captures a leakage current of the AC/DC power converter 2. Summation may be performed on the leakage currents captured by the two leakage current sampling circuits to obtain a sum of leakage currents of all the power converters, namely, a leakage current of the power conversion device. For the AC/DC power converter 1, the AC/DC power converter 1 may determine a status of the AC/DC power converter 1, to be specific, determine whether the AC/DC power converter 1 is in an on state or an off state, based on the leakage current captured by the leakage current sampling circuit 1 and the sum of the leakage currents of all the power converters. For the AC/DC power converter 2, the AC/DC power converter 2 may determine a status of the AC/DC power converter 2, to be specific, determine whether the AC/DC power converter 2 is in an on state or an off state, based on the leakage current captured by the leakage current sampling circuit 2 and the sum of the leakage currents of all the power converters.

In this embodiment of this application, each power converter corresponds to one leakage current sampling circuit. In other words, one leakage current sampling circuit captures a leakage current of one power converter. The power conversion device may accurately identify a location of failure based on a leakage current of each power converter and the sum of the leakage currents of the plurality of power converters. Therefore, only a faulty component in the power conversion device needs to be turned off, and other normal components may still continue to operate. In this way, the power conversion device is protected, and system redundancy can be improved.

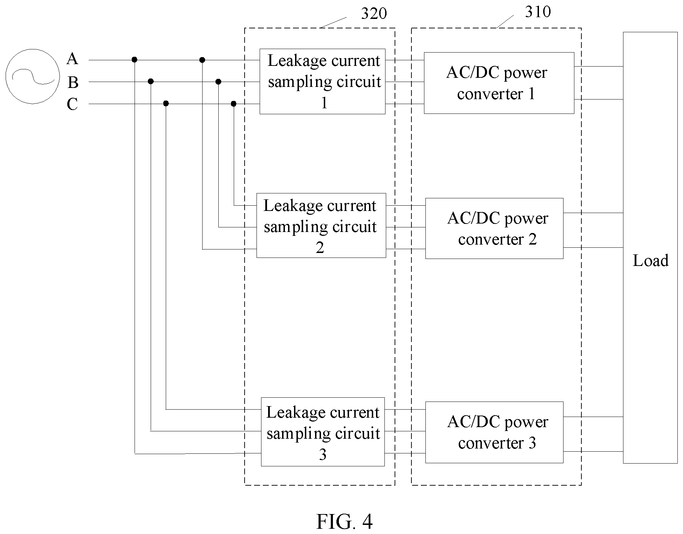

FIG. 3 shows two parallel AC/DC power converters. When a system needs to be expanded, assuming that three parallel AC/DC power converters are required, an AC/DC power converter 3 may be connected in parallel based on FIG. 3. For the AC/DC power converter 3, a leakage current sampling circuit 3 may be added to capture a leakage current of the AC/DC power converter 3, as shown in FIG. 4. Because the leakage current sampling circuit 3 only needs to capture the leakage current of the AC/DC power converter 3, a leakage current transformer used in the leakage current sampling circuit 3 only needs to be able to withstand the leakage current of the AC/DC power converter 3. To be specific, the leakage current transformer in the leakage current sampling circuit 3 has a capability of capturing a maximum leakage current of the AC/DC power converter 3.

In this embodiment of this application, a type of the leakage current transformer in the newly added leakage current sampling circuit 3 may be consistent or inconsistent with a type of a leakage current transformer in the leakage current sampling circuit 1 or the leakage current sampling circuit 2 depending on a parameter of the AC/DC power converter 3. Particularly, if the parameter of the AC/DC power converter 3 is consistent with a parameter of the AC/DC power converter 1 or the AC/DC power converter 2, the type of the leakage current transformer in the leakage current sampling circuit 3 may be consistent with the type of the leakage current transformer in the leakage current sampling circuit 1 or the leakage current sampling circuit 2.

In this embodiment of this application, when the system needs to be expanded, for example, a quantity of parallel power converters is increased, only a quantity of leakage current sampling circuits needs to be increased, and a leakage current transformer in an added leakage current sampling circuit only needs to be selected based on a current specification of a corresponding power converter. To be specific, the leakage current transformer in the added leakage current sampling circuit only needs to have a capability of capturing a maximum leakage current of a corresponding power converter. Compared with a case in which one leakage current transformer is used to capture leakage currents of all power converters in a system, in this embodiment of this application, selection of a leakage current transformer in a leakage current sampling circuit is not greatly limited, and costs can also be reduced. In addition, when parallel power converters are added to the system, power converters may be directly combined, or power converters with different power levels may even be combined. This can improve flexibility and scalability of a parallel system.

The following describes a specific process of protecting the power conversion device.

In an embodiment, that the power conversion device is configured to turn on or turn off any power converter based on a leakage current of each power converter and a sum of leakage currents of the plurality of power converters includes: The power conversion device is configured to: when a sum of leakage currents of the plurality of power converters is greater than a first current threshold, turn off at least some of first power converters, so that a sum of leakage currents of the plurality of power converters is less than or equal to the first current threshold. The first power converter is a power converter whose leakage current is greater than a second current threshold among the plurality of power converters. The first current threshold is a maximum leakage current allowed by the power conversion device, and the second current threshold is a maximum leakage current allowed by the first power converter.

In this embodiment of this application, assuming that a maximum leakage current allowed by each power converter is 300 mA, for a power conversion device including two power converters, a maximum leakage current allowed by the power conversion device is 600 mA.

FIG. 3 is still used as an example. If a leakage current of the AC/DC power converter 1 is 500 mA and a leakage current of the AC/DC power converter 2 is 200 mA, a sum of the leakage currents of the two AC/DC power converters is 700 mA. The sum of the leakage currents of the two AC/DC power converters is greater than the maximum leakage current allowed by the power conversion device, and the leakage current of the AC/DC power converter 1 is greater than the maximum leakage current allowed by the AC/DC power converter 1. Therefore, the power conversion device may control the AC/DC power converter 1 to be turned off, so that a leakage current of the power conversion device meets an operation requirement. This can improve safety of the power conversion device.

It should be noted that, in this embodiment of this application, when the sum of the leakage currents of the plurality of power converters is greater than the first current threshold, leakage currents of at least two AC/DC power converters may be greater than maximum leakage currents respectively allowed by the at least two AC/DC power converters. In this case, all of the at least two AC/DC power converters may be turned off, or some of the at least two AC/DC power converters may be turned off.

For example, assuming that a maximum leakage current allowed by each power converter is 300 mA, for a power conversion device including three power converters, a maximum leakage current allowed by the power conversion device is 900 mA.

If a leakage current of the AC/DC power converter 1 is 500 mA, a leakage current of the AC/DC power converter 2 is 400 mA, and a leakage current of the AC/DC power converter 3 is 200 mA, a sum of the leakage currents of the three AC/DC power converters is 1100 mA. The sum of the leakage currents of the three AC/DC power converters is greater than the maximum leakage current allowed by the power conversion device, and the leakage current of the AC/DC power converter 1 and the leakage current of the AC/DC power converter 2 are greater than the maximum leakage current allowed by each of the AC/DC power converter 1 and the AC/DC power converter 2.

In an implementation, the AC/DC power converter 1 or the AC/DC power converter 2 may be turned off. If the AC/DC power converter 1 is turned off, the sum of the leakage currents of the plurality of power converters is a sum of the leakage current of the AC/DC power converter 2 and the leakage current of the AC/DC power converter 3, namely, 600 mA. Alternatively, if the AC/DC power converter 2 is turned off, the sum of the leakage currents of the plurality of power converters is a sum of the leakage current of the AC/DC power converter 1 and the leakage current of the AC/DC power converter 3, namely, 700 mA. Regardless of which power converter is turned off, the sum of the leakage currents is less than the maximum leakage current allowed by the power conversion device, so that a leakage current of the power conversion device can meet an operation requirement. This can improve safety of the power conversion device.

In another implementation, the AC/DC power converter 1 and the AC/DC power converter 2 may be turned off. In this way, the sum of the leakage currents of the plurality of power converters is the leakage current of the AC/DC power converter 3, namely, 200 mA. The leakage current is less than the maximum leakage current allowed by the power conversion device, and the sum of the leakage currents is less than the maximum leakage current allowed by the power conversion device, so that a leakage current of the power conversion device can meet an operation requirement. This can improve safety of the power conversion device. In addition, in this implementation, because the power conversion device turns off all power converters whose leakage currents are greater than a leakage current allowed by the power conversion device, bodily harm can be avoided, and personal safety can be ensured.

It should be understood that, when the sum of the leakage currents of the plurality of power converters is greater than the first current threshold, if leakage currents of at least two AC/DC power converters are greater than maximum leakage currents respectively allowed by the at least two AC/DC power converters, a general principle is to turn off at least some of the at least two AC/DC power converters to make a system leakage current less than the first current threshold. In addition, when the leakage currents of the at least two AC/DC power converters are greater than the maximum leakage currents respectively allowed by the at least two AC/DC power converters, an AC/DC power converter with a largest leakage current among the at least two AC/DC power converters may be preferentially turned off.

In addition, in this embodiment of this application, because each power converter supports independent leakage current detection, when one of the power converters is turned off, normal operation of other power converters is not affected, in other words, the other power converters may still continue to operate. This can improve redundancy of the power conversion device.

In some embodiments, although a leakage current of a power conversion device does not exceed a maximum leakage current allowed by the power conversion device, leakage currents of some power converters may still exceed maximum leakage currents respectively allowed by the power converters. For a specific processing manner in this case, refer to the following descriptions.

In an embodiment, the power conversion device is further configured to: when a sum of leakage currents of the plurality of power converters is less than or equal to the first current threshold, turn off the first power converter; or when a sum of leakage currents of the plurality of power converters is less than or equal to the first current threshold, skip turning off the first power converter.

For example, FIG. 3 is still used as an example. Assuming that a maximum leakage current allowed by each power converter is 300 mA, for a power conversion device including two power converters, a maximum leakage current allowed by the power conversion device is 600 mA. If a leakage current of the AC/DC power converter 1 is 400 mA and a leakage current of the AC/DC power converter 2 is 100 mA, a sum of the leakage currents of the two AC/DC power converters is 500 mA.

In an implementation, the sum of the leakage currents of the two AC/DC power converters is less than the maximum leakage current allowed by the power conversion device, and a leakage current of the power conversion device meets a corresponding safety regulation. Therefore, the power conversion device may keep the two AC/DC power converters in a working state, in other words, does not turn off any AC/DC power converter.

In another implementation, although the sum of the leakage currents of the two AC/DC power converters is less than the maximum leakage current allowed by the power conversion device, the leakage current of the AC/DC power converter 1 is greater than the maximum leakage current allowed by the AC/DC power converter 1, and when insulation between a metal housing of the AC/DC power converter 1 and an internal charged component fails, if the housing of the AC/DC power converter 1 is not grounded and a human body is in contact with the housing, the leakage current flows into the ground through the human body, causing bodily harm. Therefore, in this case, the power conversion device controls the AC/DC power converter 1 to be turned off, to avoid bodily harm and ensure personal safety.

It should be noted that, in the foregoing example, it is assumed that maximum leakage currents allowed by the two AC/DC power converters are consistent. In an actual case, maximum leakage currents allowed by the two AC/DC power converters may be inconsistent. For example, a maximum leakage current allowed by the AC/DC power converter 1 is 400 mA, and a maximum leakage current allowed by the AC/DC power converter 2 is 300 mA.

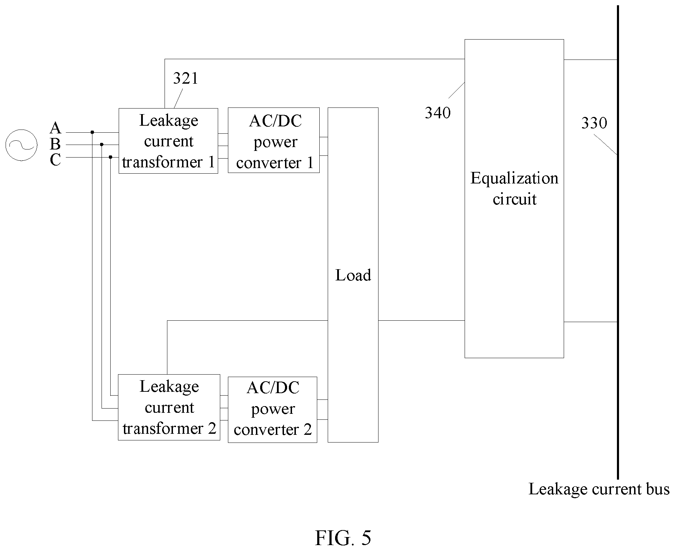

FIG. 5 is a diagram of another power conversion device according to an embodiment of this application.

In an embodiment, the power conversion device further includes a leakage current bus 330 and an equalization circuit 340, and a leakage current sampling circuit 320 includes a leakage current transformer 321. The leakage current transformer 321 is configured to capture a leakage current of a corresponding power converter. An input end of the equalization circuit 340 is connected to a plurality of leakage current transformers. An output end of the equalization circuit 340 is connected to the leakage current bus. The equalization circuit 340 is configured to average output values of the plurality of leakage current transformers and then output an average value.

The power conversion device is configured to calculate a product of a leakage current corresponding to a voltage of the leakage current bus and a quantity of a plurality of power converters, to obtain a sum of leakage currents of the plurality of power converters.

In this embodiment of this application, the leakage current transformer 321 is mounted in a manner of encircling a loop wire. During operation of a power converter, the leakage current transformer may detect a leakage current of a corresponding power converter.

In this embodiment of this application, each leakage current transformer is configured to capture a leakage current of a corresponding power converter, and output values of all the leakage current transformers are output to the leakage current bus through the equalization circuit. In this way, a value of the leakage current bus is an average value of sums of output values of the plurality of power converters. In this embodiment of this application, the output value may be a voltage value. In this case, the equalization circuit 340 may average voltage values output by the plurality of leakage current transformers, and then output an average voltage value to the leakage current bus. The sum of the leakage currents of the plurality of power converters may be obtained based on a product of a leakage current corresponding to the average voltage value and the quantity of power converters.

For example, it is assumed that a leakage current of an AC/DC power converter 1 detected by a leakage current transformer 1 is 250 mA, a leakage current of an AC/DC power sensor 2 detected by a leakage current transformer 2 is 500 mA, and the two leakage current transformers output voltage values respectively corresponding to the leakage currents captured by the two leakage current transformers. For example, it is assumed that a voltage value corresponding to a leakage current of 0 mA is 2.0 V, and each time the leakage current increases by 250 mA, the voltage value increases by 0.1 V In this case, in this embodiment of this application, a voltage value output by the AC/DC power converter 1 is 2.1 V, and a voltage value output by the AC/DC power converter 2 is 2.2 V A voltage value that is output to the leakage current bus and that is obtained after the two voltage values pass through the equalization circuit is 2.15 V The power conversion device may learn, through derivation, that a leakage current corresponding to the leakage current bus is 375 mA. Further, the power conversion device may obtain the sum of the leakage currents of the plurality of power converters based on the leakage current obtained from the leakage current bus and a quantity of AC/DC power converters: 375 × 2 = 750 mA.

In this embodiment of this application, the equalization circuit averages the output values of the plurality of leakage current transformers and then outputs the average value, and the output end of the equalization circuit is connected to the leakage current bus. Therefore, the voltage value of the leakage current bus is the average value of the sums of the voltage values output by the plurality of leakage current transformers. The power conversion device only needs to derive a corresponding leakage current based on the voltage value of the leakage current bus, and multiply the leakage current by the quantity of the plurality of power converters to obtain the sum of the leakage currents of the plurality of power converters. In this way, even if the power conversion device includes a large quantity of power converters, the power conversion device can obtain the sum of the leakage currents of the plurality of power converters based only on the product of the leakage current corresponding to the voltage of the leakage current bus and the quantity of the plurality of power converters. This can reduce complexity of calculation.

The foregoing describes a case in which the equalization circuit 340 is configured to average the output values of the plurality of leakage current transformers and then output the average value, and the value of the leakage current bus is the average value of the output values of the plurality of leakage current transformers. The following specifically describes a diagram of a topology of the equalization circuit.

In an embodiment, the equalization circuit 340 includes a plurality of equalization resistors and a plurality of switch circuits, and each leakage current transformer is connected to the leakage current bus 330 through one equalization resistor and one switch circuit that are connected in series.

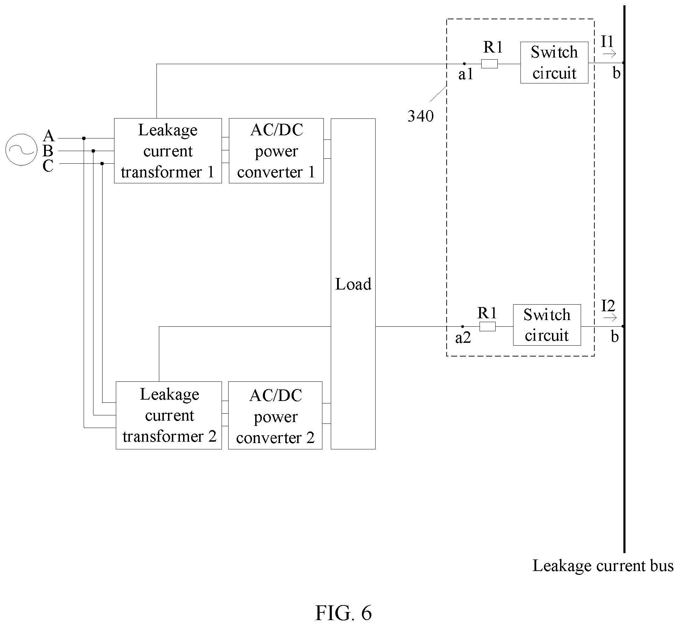

FIG. 6 is a diagram of still another power conversion device according to an embodiment of this application.

As shown in FIG. 6, in this embodiment of this application, an equalization resistor may be R1, a leakage current transformer 1 is connected to a leakage current bus 330 through one equalization resistor R1 and one switch circuit, and a leakage current transformer 2 is connected to the leakage current bus 330 through one equalization resistor R1 and one switch circuit.

Specifically, for an AC/DC power converter 1, the leakage current transformer 1 captures a leakage current of the AC/DC power converter 1, and a voltage value output by the leakage current transformer 1 is transmitted to an equalization circuit, and is transmitted to the leakage current bus 330 through one equalization resistor R1 and one switch circuit. The leakage current transformer 2 captures a leakage current of an AC/DC power converter 2, and a voltage value output by the leakage current transformer 2 is transmitted to the equalization circuit, and is transmitted to the leakage current bus 330 through one equalization resistor R1 and one switch circuit.

It is assumed that a current corresponding to a voltage that is transmitted to the leakage current bus and that is obtained after the voltage value output by the leakage current transformer 1 passes through one equalization resistor R1 and one switch circuit is I1. In this case, I1 = (a voltage at a connection point between the leakage current transformer 1 and R1 - the voltage of the leakage current bus)/R1 = (Ua1 - Ub)/R1. It is assumed that a current corresponding to a voltage that is transmitted to the leakage current bus and that is obtained after the voltage value output by the leakage current transformer 2 passes through one equalization resistor R1 and one switch circuit is I2. In this case, I2 = (a voltage at a connection point between the leakage current transformer 2 and R1 - the voltage of the leakage current bus)/R1 = (Ua2 - Ub)/R1.

According to the Kirchhoffs current law, a sum of all currents entering a node and a sum of all currents leaving the node are 0. In this case, I1 + I2 = (Ua1 - Ub)/R1 + (Ua2 - Ub)/R1 = 0. Therefore, it can be learned, through derivation, that Ua1 + Ua2 = 2 × Ub, in other words, Ub = (Ua1 + Ua2)/2. In addition, because Ub = I_{system average} × K + U_{offset}, a system leakage current may be obtained, where K is a variation coefficient, and U_{offset} is an offset voltage.

For example, it is assumed that Ua1 = 2.1 V, Ua2 = 2.2 V, U_{offset} = 2.0 V, and K = 0.4. In this case, Ub = (Ua1 + Ua2)/2 = 2.15 V, 2.15 = I_{system average} × K + V_{offset} = I_{system average} × 0.4 + 2.0, and I_{system average} = 0.375 A. Therefore, the system leakage current is as follows: 0.375 × 2 = 0.75 A.

In this embodiment of this application, the switch circuit may include a mechanical switch, such as a relay or a disconnector; or the switch circuit may include a solid-state switch, and may be specifically a triode, a metal-oxide semiconductor field-effect transistor (metal-oxide-semiconductor field-effect transistor, MOSFET), an insulated gate bipolar transistor (insulated gate bipolar transistor, IGBT), a gallium nitride (gallium nitride, GaN) high electron mobility transistor (high electron mobility transistor, HEMT), or the like.

In this embodiment of this application, each leakage current transformer is connected to the leakage current bus through one equalization resistor and one switch circuit that are connected in series. In this way, after an output value of each leakage current transformer passes through the equalization circuit, a value transmitted to the leakage current bus is an average value of sums of output values of the plurality of leakage current transformers. This helps the power conversion device calculate a sum of leakage currents of all power converters, to protect the power conversion device.

In an embodiment, the equalization circuit 340 further includes a plurality of first operational amplifiers. A non-inverting input end of each first operational amplifier is connected to a corresponding leakage current transformer. An inverting input end of each first operational amplifier is connected to an output end of the first operational amplifier. An output end of each first operational amplifier is connected to one end of the equalization resistor. The other end of the equalization resistor is connected to the leakage current bus through the switch circuit.

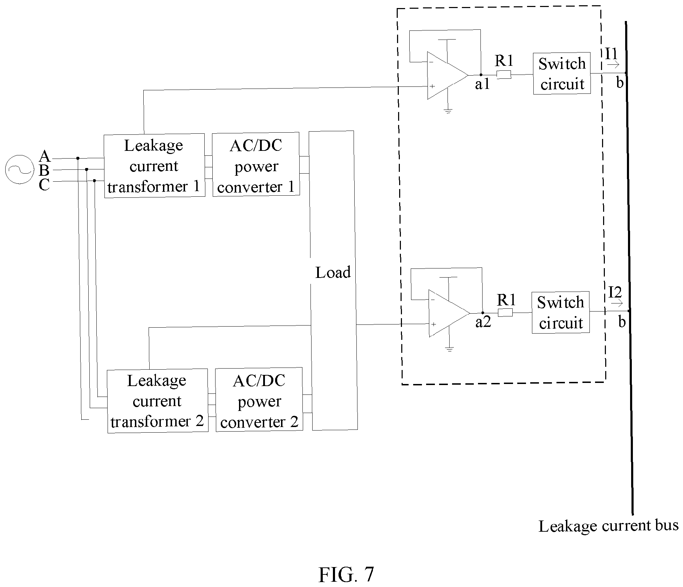

FIG. 7 is a diagram of still another power conversion device according to an embodiment of this application.

It can be learned from FIG. 7 that a leakage current transformer 1 is connected to a corresponding equalization resistor R1 through a corresponding first operational amplifier, a leakage current transformer 2 is connected to a corresponding equalization resistor R1 through a corresponding first operational amplifier, and the equalization resistor R1 is connected to a leakage current bus through a switch circuit.

In this embodiment of this application, a non-inverting input end of the first operational amplifier is connected to the leakage current transformer, and an inverting input end of the first operational amplifier is connected to an output end of the first operational amplifier. Therefore, a voltage at the non-inverting input end of the first operational amplifier is consistent with a voltage value at the output end of the first operational amplifier. For the first operational amplifier connected to the leakage current transformer 1, an output value of the leakage current transformer 1 is input to the input end of the first operational amplifier, and the output end of the first operational amplifier also outputs the output value of the leakage current transformer 1. For the first operational amplifier connected to the leakage current transformer 2, an output value of the leakage current transformer 2 is input to the input end of the first operational amplifier, and the output end of the first operational amplifier also outputs the output value of the leakage current transformer 2.

In this embodiment of this application, the first operational amplifier is intended to isolate a circuit connected to the input end of the first operational amplifier from a circuit connected to the output end of the first operational amplifier. In other words, the circuit connected to the input end of the first operational amplifier and the circuit connected to the output end of the first operational amplifier do not affect each other. For example, fluctuation of a voltage of the circuit connected to the input end of the first operational amplifier does not affect a voltage value of the leakage current bus connected to the output end, or fluctuation of a voltage of the circuit connected to the output end of the first operational amplifier does not affect a voltage value of the leakage current transformer connected to the input end. In this way, even if a node voltage in the circuit fluctuates, impact on a voltage value output by each leakage current transformer or a voltage value of the leakage current bus is small. This helps the power conversion device accurately obtain a leakage current of each power converter and a sum of all leakage currents. Further, this can improve accuracy of protecting the power conversion device.

The following describes solutions of this application by using an example in which the switch circuit includes a triode.

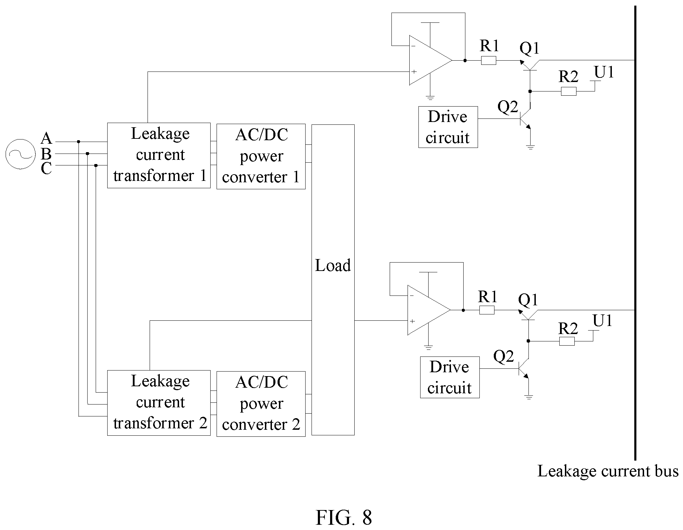

FIG. 8 is a diagram of still another power conversion device according to an embodiment of this application.

In an embodiment, a switch circuit includes two switching transistors Q1 and Q2, a current-limiting resistor R2, a first voltage source U1, and a drive circuit. One switching transistor Q1 is connected in series to a connection line connecting an equalization resistor R1 and a leakage current bus, and a base of the switching transistor Q1 is grounded through the other switching transistor Q2. The first voltage source U1 is connected to a connection point between the two switching transistors through the current-limiting resistor R2. The drive circuit is connected to a base of the other switching transistor Q2.

In this embodiment of this application, when the drive circuit outputs a low level, because an emitter of the switching transistor Q2 is grounded and the switching transistor Q2 is an N-channel transistor, a base voltage of the switching transistor Q2 is less than an emitter voltage of the switching transistor Q2, so that the switching transistor Q2 is turned off. In addition, because the base of the switching transistor Q1 is connected to the first voltage source U1 through the current-limiting resistor R2, this is equivalent to that the base of the switching transistor Q1 is connected to the first voltage source U1. In addition, an emitter of the switching transistor Q1 is connected to an output end of a first operational amplifier through an equalization resistor R1. If a voltage value output by the first voltage source U1 is large, a base voltage of the switching transistor Q1 is greater than an emitter voltage of the switching transistor Q1. When a voltage between the base and the emitter of the switching transistor Q1 is greater than a turn-on voltage of the switching transistor Q1, the switching transistor Q1 is turned on. In this case, an output value of a leakage current transformer 1 is transmitted to the leakage current bus through a corresponding first operational amplifier, the equalization resistor R1, and the switching transistor Q1. Similarly, according to the same principle, an output value of a leakage current transformer 2 is transmitted to the leakage current bus through a corresponding first operational amplifier, the equalization resistor R1, and the switching transistor Q1.

When the drive circuit outputs a high level, because the emitter of the switching transistor Q2 is grounded and the switching transistor Q2 is an NPN transistor, a base voltage of the switching transistor Q2 is greater than an emitter voltage of the switching transistor Q2, so that the switching transistor Q2 is turned on. In addition, because a collector of the switching transistor Q2 is connected to the base of the switching transistor Q1, this is equivalent to that the base of the switching transistor Q1 is grounded. In addition, the emitter of the switching transistor Q1 is connected to the output end of the first operational amplifier through the equalization resistor R1, an emitter voltage of the switching transistor Q1 is greater than a base voltage of the switching transistor Q1, and the switching transistor Q1 is turned off. In this case, an output value of the leakage current transformer 1 is not transmitted to the leakage current bus. Similarly, according to the same principle, an output value of the leakage current transformer 2 is not transmitted to the leakage current bus.

In this embodiment of this application, the switch circuit includes the two switching transistors, the current-limiting resistor, the first voltage source, and the drive circuit, and the drive circuit outputs different signals to control turn-on or turn-off of the switching transistors, to determine whether an output value of a leakage current transformer is to be transmitted to the leakage current bus. Particularly, when one or more power converters stop operating, the drive circuit may output a high level, and control a switching transistor connected in series to the connection line connecting the equalization resistor and the leakage current bus to be turned off, so that an output value of a leakage current transformer corresponding to the power converter is not transmitted to the leakage current bus. This can avoid impact of the output value of the leakage current transformer on a system leakage current, and help the power conversion device obtain an accurate system leakage current. Further, this can improve accuracy of protecting the power conversion device.

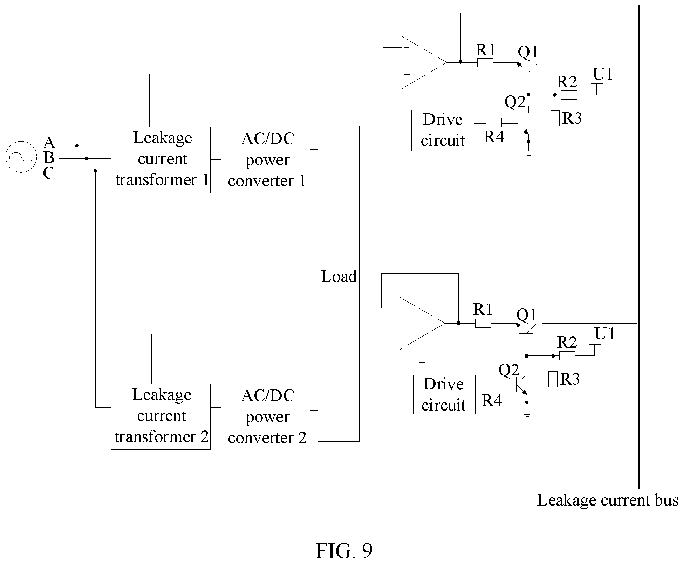

FIG. 9 is a diagram of still another power conversion device according to an embodiment of this application.

In an embodiment, a switch circuit further includes a voltage-division resistor R3, one end of the voltage-division resistor R3 is connected to an emitter of another switching transistor Q2, and the other end of the voltage-division resistor R3 is connected to a connection point between a current-limiting resistor R2 and a collector of the another switching transistor Q2.

In this embodiment of this application, if a voltage output by a first voltage source U1 is large and a resistance of the current-limiting resistor R2 is small, the current-limiting resistor R2 bears a small part of the voltage. In this case, a base voltage of a switching transistor Q1 is far greater than an emitter voltage of the switching transistor Q1, and may exceed a limit voltage between a base and an emitter of the switching transistor Q1, causing damage to the switching transistor Q1.

However, in this embodiment of this application, the voltage-division resistor R3 is provided, and the first voltage source U1 is grounded through the current-limiting resistor R2 and the voltage-division resistor R3. Therefore, if a resistance of the voltage-division resistor R3 is far greater than the resistance of the current-limiting resistor R2, the voltage-division resistor R3 bears a large part of the voltage output by the first voltage source U1. In this way, the base voltage of the switching transistor Q1 can be reduced, to reduce a risk of damage to the switching transistor Q1.

For example, the voltage output by the first voltage source U1 is 12 V It is assumed that a turn-on voltage of the switching transistor Q1 is 3.4 V, and the limit voltage is 8 V If a voltage at two ends of the current-limiting resistor R2 is 2 V, a voltage between the base and the emitter of the switching transistor Q1 is 10 V, which is greater than the limit voltage of the switching transistor Q1. This causes damage to the switching transistor Q1. However, in this embodiment of this application, because the voltage-division resistor R3 is provided, if a ratio of the resistance of the current-limiting resistor R2 to the resistance of the voltage-division resistor R3 is 1:2, a voltage at the two ends of the current-limiting resistor R2 is 4 V, and a voltage at two ends of the voltage-division resistor R3 is 8 V Therefore, a base voltage of the switching transistor Q1 is 4 V If an emitter voltage of the switching transistor Q1 is 0.5 V, a voltage between the base voltage and the emitter of the switching transistor Q1 is 3.5 V, which is slightly greater than the turn-on voltage of the switching transistor Q1, but does not exceed the limit voltage between the base and the emitter of the switching transistor Q1. This can reduce a risk of damage to the switching transistor Q1.

In an embodiment, the switch circuit further includes another current-limiting resistor R4, and the another current-limiting resistor R4 is connected in series between a drive circuit and a base of the another switching transistor Q2.

In this embodiment of this application, if a voltage output by the drive circuit is large, a current corresponding to the voltage output by the drive circuit is large, and a base current input to the second switching transistor Q2 is large, and may exceed a limit current that the base of the switching transistor Q2 can withstand. This causes damage to the switching transistor Q2.

However, in this embodiment of this application, as shown in FIG. 9, because the current-limiting resistor R4 is provided, even if the voltage output by the drive circuit is large, the current-limiting resistor R4 can reduce the base current input to the switching transistor Q2. This can reduce a risk of damage to the switching transistor Q2.

For example, the voltage output by the drive circuit is 12 V It is assumed that a turn-on voltage of the switching transistor Q2 is 3.4 V, and the base current is 1 A. If the current-limiting resistor R4 is not provided, a current corresponding to the 12 V output by the drive circuit is likely to exceed the current of 1 A, and is greater than the limit current of the switching transistor Q2. This causes damage to the switching transistor Q2. However, in this embodiment of this application, the current-limiting resistor R4 is provided. In this case, the base current flowing into the switching transistor Q2 decreases. For example, the base current flowing into the switching transistor Q2 is 0.6 A, which is less than the limit current that the base of the switching transistor Q2 can withstand. This can reduce a risk of damage to the switching transistor Q2.

Based on this, the foregoing describes a design of an equalization circuit. The following describes a specific sampling point and sampling circuit from which a leakage current sampling circuit captures a voltage value.

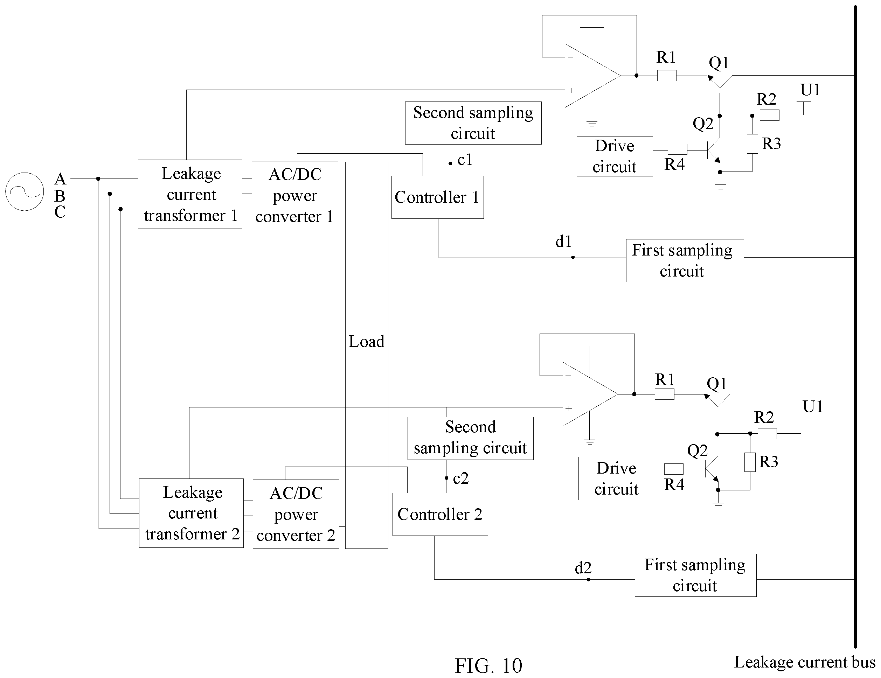

In an embodiment, as shown in FIG. 10, a power conversion device further includes a plurality of controllers, a leakage current sampling circuit further includes a plurality of voltage sampling circuits, and the plurality of voltage sampling circuits include a first voltage sampling circuit and a plurality of second voltage sampling circuits.

The plurality of controllers are in a one-to-one correspondence with a plurality of power converters, and each controller is configured to control a corresponding power converter.

Input ends of the plurality of first voltage sampling circuits are connected to a leakage current bus, an output end of each first voltage sampling circuit is connected to the controller in a one-to-one correspondence, and each first voltage sampling circuit is configured to capture a voltage value of the leakage current bus.

An input end of each second voltage sampling circuit is connected to a connection point between a corresponding leakage current transformer and an equalization circuit, an output end of each second voltage sampling circuit is connected to the controller in a one-to-one correspondence, and each second voltage sampling circuit is configured to capture a voltage value at a connection point between a corresponding leakage current transformer and the equalization circuit.

In this embodiment of this application, each controller is connected to an output end of a first voltage sampling circuit, and each first voltage sampling circuit is configured to capture a voltage value of the leakage current bus, so that each controller can obtain the voltage value of the leakage current bus. In addition, each controller is connected to an output end of a corresponding second voltage sampling circuit, and each second voltage sampling circuit is configured to capture a voltage value of a connection point between a corresponding leakage current transformer and the equalization circuit, so that each controller can obtain a voltage value output by a corresponding leakage current transformer.

As shown in FIG. 10, a controller 1 is connected to an AC/DC power converter 1, and the controller 1 may obtain a voltage at a point c1 and a voltage at a point d1. This is equivalent to that the controller 1 obtains a voltage value output by a leakage current transformer 1 and a voltage value of the leakage current bus. Therefore, a leakage current of the AC/DC power converter 1 may be derived based on the voltage value output by the leakage current transformer 1, an average value of sums of leakage currents of all power converters may be derived based on the voltage value of the leakage current bus, and a sum of leakage currents of all the power converters may be obtained based on the average value and a quantity of power converters.

For example, it is assumed that a voltage value corresponding to a leakage current of 0 mA is 2.0 V, and each time the leakage current increases by 250 mA, the voltage value increases by 0.1 V If a voltage value that is output by the first voltage sampling circuit and that is obtained by the controller 1 is 2.1 V and a voltage that is output by the second voltage sampling circuit and that is obtained by the controller 1 is 2.2 V, the controller 1 may learn, through derivation based on the voltage value output by the first voltage sampling circuit, that an average value of leakage currents of all AC/DC power converters is 250 mA; and learn, based on the average value and a quantity of AC/DC power converters, that a sum of the leakage currents of all the power converters is 500 mA. The controller 1 may learn, through derivation based on the voltage value output by the second voltage sampling circuit, that a leakage current of the AC/DC power converter 1 captured by the leakage current transformer 1 is 250 mA. Further, the controller 1 may control turn-on or turn-off of the AC/DC power converter 1 based on the two leakage currents.

If a voltage value that is output by the first voltage sampling circuit and that is obtained by a controller 2 is 2.1 V and a voltage that is output by the second voltage sampling circuit and that is obtained by the controller 2 is 2.0 V, the controller 2 may learn, through derivation based on the voltage value output by the first voltage sampling circuit, that an average value of leakage currents of all the AC/DC power converters is 250 mA; and learn, based on the average value and the quantity of AC/DC power converters, that a sum of the leakage currents of all the power converters is 500 mA. The controller 2 may learn, through derivation based on the voltage value output by the second voltage sampling circuit, that a leakage current of the AC/DC power converter 2 captured by a leakage current transformer 2 is 0 mA. Further, the controller 2 may control turn-on or turn-off of the AC/DC power converter 2 based on the two leakage currents.

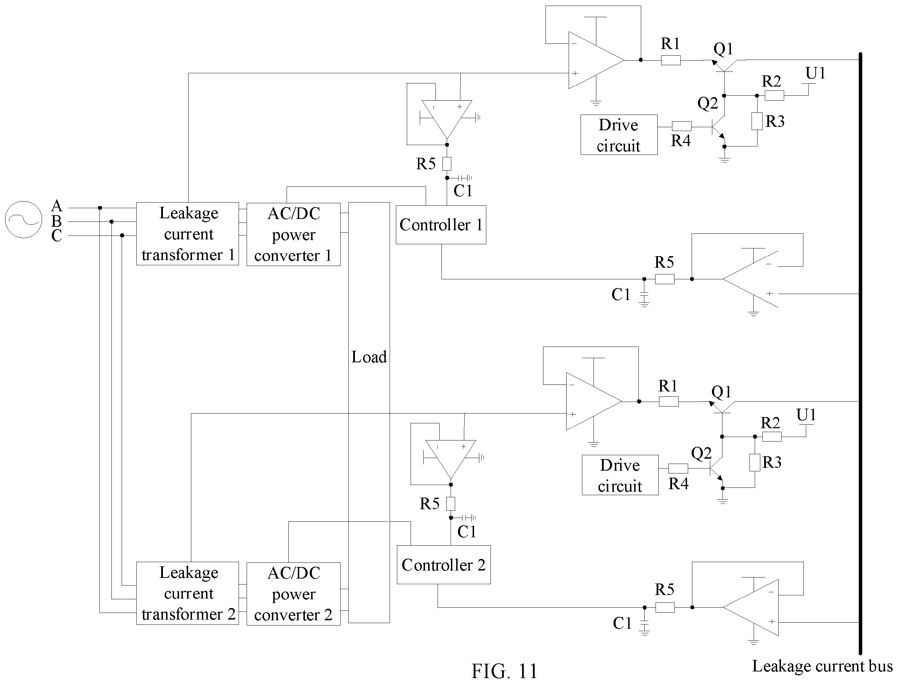

In an embodiment, as shown in FIG. 11, each voltage sampling circuit includes a second operational amplifier, a first resistor R5, and a filter capacitor C1.

A non-inverting input end of the second operational amplifier is an input end of the voltage sampling circuit. An inverting input end of the second operational amplifier is connected to an output end of the second operational amplifier. The output end of the second operational amplifier is connected to one end of the first resistor R5. The other end of the first resistor R5 is connected to one end of the filter capacitor C1. The other end of the filter capacitor C1 is grounded. A connection point between the other end of the first resistor R5 and the filter capacitor C1 is an output end of the voltage sampling circuit.

In this embodiment of this application, a non-inverting input end of a second operational amplifier in a first voltage sampling circuit is connected to a leakage current bus, and an inverting input end of the second operational amplifier is connected to an output end of the second operational amplifier. In this case, a voltage value output by the output end of the second operational amplifier is a voltage value of the leakage current bus.

A non-inverting input end of a second operational amplifier in a second voltage sampling circuit is connected to a connection point between a leakage current transformer and an equalization circuit, and an inverting input end of the second operational amplifier is connected to an output end of the second operational amplifier. In this case, a voltage value output by the output end of the second operational amplifier is a voltage value at the connection point between the leakage current transformer and the equalization circuit.

Although the first resistor R5 is further connected between a controller and the output end of the second operational amplifier, a voltage division function of the first resistor R5 is ignorable. Therefore, a voltage value obtained by the controller may be considered as the voltage value of the leakage current bus and the voltage value at the connection point between the leakage current transformer and the equalization circuit.

A voltage output by the output end of the second operational amplifier may have noise. The first resistor R5 and the filter capacitor C1 may filter the voltage output by the output end of the first operational amplifier, so that the voltage value captured by the controller is accurate. This can improve accuracy of protecting a power conversion device.

In addition, the first resistor R5 may further limit a current. Specifically, if the voltage value output by the output end of the second operational amplifier is excessively large, a transient current flowing into a pin of a chip of the controller is large. This is likely to cause damage to the controller. For example, the voltage value output by the output end of the second operational amplifier is 3.3 V If the first resistor R5 is not provided, the transient current flowing into the pin of the chip of the controller may be greater than a limit current that the pin of the chip can withstand, causing damage to the pin of the chip. However, the first resistor R5 is provided, and the first resistor R5 can reduce the transient current flowing into the pin of the chip, to reduce a risk of damage to the pin of the chip.

It can be understood that, although the first resistor R5 is provided, impact on capturing a voltage value of the leakage current bus by the controller is small. This is because the controller obtains a steady-state voltage at an output end of a voltage sampling circuit. In a steady state, a current flowing through the first resistor R5 is quite small. Usually, a voltage at two ends of the first resistor R5 is less than 1 mV Compared with the voltage value of 3.3 V output by the output end of the second operational amplifier, the voltage value less than 1 mV is almost ignorable. Therefore, a voltage, captured by the controller, at the connection point between the first resistor R5 and the filter capacitor C1 may be considered as a voltage of the leakage current bus. In other words, even if the first resistor R5 is provided, a voltage value, captured by the controller, at the connection point between the first resistor R5 and the filter capacitor C1 is accurate.

As described above, a leakage current transformer is configured to capture a leakage current of a corresponding power converter. However, because there is a deviation between a leakage current captured by each leakage current transformer and a corresponding voltage value, a corresponding AC/DC power converter calibrates a relationship between a corresponding leakage current and a corresponding voltage value. However, a leakage current transformer captures a pre-calibrated leakage current of a corresponding power converter. Even if leakage current transformers capture a same leakage current, output voltage values may still be inconsistent. Therefore, in this embodiment of this application, a calibration circuit may be further designed, to reduce a deviation between leakage current transformers.

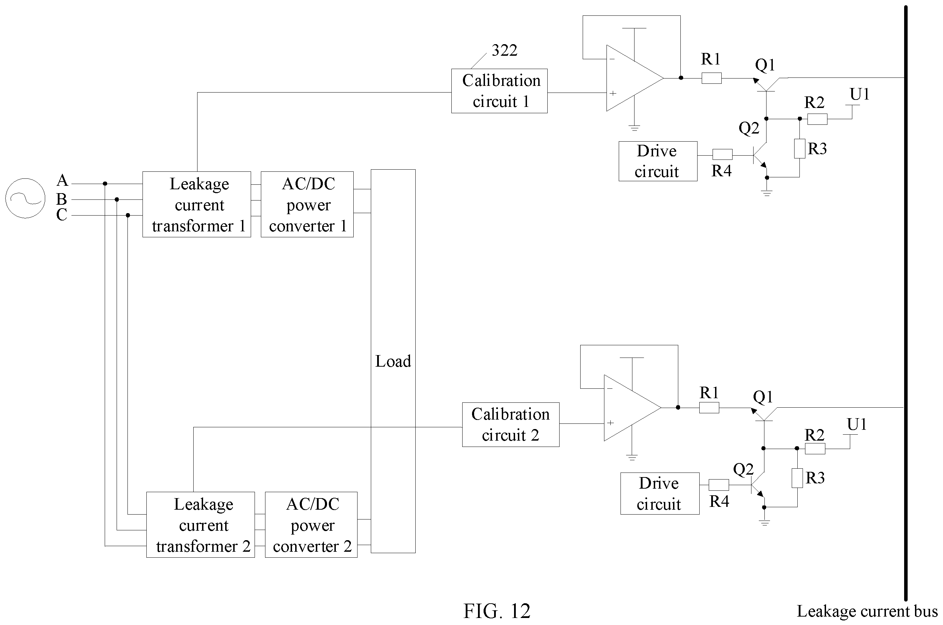

In an embodiment, as shown in FIG. 12, a leakage current sampling circuit further includes a calibration circuit 322. The calibration circuit 322 is connected in series between a leakage current transformer and an equalization circuit. During initial operation of a power conversion device, each calibration circuit is configured to make output values of all first voltage sampling circuits consistent when an input value of each leakage current transformer is a preset value.

In this embodiment of this application, a calibration circuit 322 is connected in series between each leakage current transformer and a corresponding current equalization circuit. The calibration circuit 322 may be configured to make output values of all first voltage sampling circuits consistent when an input value of each leakage current transformer is a preset value.

For example, the preset value is 0 mA, and an output value of each first voltage sampling circuit is 2.0 V If no calibration circuit is provided, when a voltage value output by a leakage current transformer 1 is 1.7 V and a voltage value output by a leakage current transformer 2 is 1.8 V, for a controller 1, the controller 1 may directly obtain the voltage value output by the leakage current transformer 1 and may obtain, in another manner, the voltage value output by the leakage current transformer 2, and the controller 1 may obtain a leakage current of an AC/DC power converter 1 based on a corresponding conversion relationship. However, because the controller 1 does not know a conversion relationship between a leakage current of an AC/DC power converter 2 and the voltage value output by the leakage current transformer 2, a calculated sum of leakage currents of all power converters in the power conversion device is inaccurate. Because a leakage current is small and is usually at an mA level, even a quite small deviation may greatly affect the power conversion device, or even cause harm to personal safety.

However, in this embodiment of this application, because the calibration circuit is designed, each calibration circuit may be configured to: during initial operation of the power conversion device, make output values of all the first voltage sampling circuits consistent when an input value of each leakage current transformer is a preset value. This can reduce a deviation.

For example, a voltage value corresponding to a leakage current of 0 mA is 2.0 V During initial operation of the power conversion device, a leakage current captured by the leakage current transformer 1 is 0 mA, a voltage value output by the leakage current transformer 1 is 1.7 V, a leakage current captured by the leakage current transformer 2 is 0 mA, and a voltage value output by the leakage current transformer 2 is 1.8 V A calibration circuit 1 may increase a voltage by 0.3 V, and a calibration circuit 2 may increase a voltage by 0.2 V Therefore, when the leakage currents captured by the leakage current transformers are 0 mA, voltages output by the calibration circuit 1 and the calibration circuit 2 are both 2.0 V In other words, when the leakage currents captured by the leakage current transformer 1 and the leakage current transformer 2 are both 0 mA, even if the voltage values output by the leakage current transformer 1 and the leakage current transformer 2 are inconsistent, after the voltage values are calibrated by the calibration circuits, voltage values output by the calibration circuit 1 and the calibration circuit 2 are consistent, for example, both are 2.0 V

During subsequent operation of the power conversion device, when a voltage that is output by the calibration circuit 1 and that is captured by the controller 1 and a voltage that is output by the calibration circuit 2 and that is captured by the controller 2 are both 2.0 V, there is no leakage current in a system. When neither a voltage that is output by the calibration circuit 1 and that is captured by the controller 1 nor a voltage that is output by the calibration circuit 2 and that is captured by the controller 2 is 2.0 V, for example, the voltage that is output by the calibration circuit 1 and that is captured by the controller 1 is 2.4 V, and the voltage that is output by the calibration circuit 2 and that is captured by the controller 2 is 2.2 V, it indicates that there is a leakage current in the system. Because the calibration circuit is designed, a leakage current corresponding to a voltage value output by each calibration circuit may be calculated by using a same criterion. Table 1 shows a leakage current corresponding to a voltage output by a calibration circuit. As shown in Table 1, a leakage current corresponding to a voltage of 2.4 V output by the calibration circuit 1 is 1000 mA, and a leakage current corresponding to a voltage of 2.2 V output by the calibration circuit 2 is 500 mA.

**Table 1**

| Leakage current (mA) | Voltage (V) |
|---|---|
| -1250 | 1.5 |
| -1000 | 1.6 |
| -750 | 1.7 |
| -500 | 1.8 |
| -250 | 1.9 |
| 0 | 2.0 |
| 250 | 2.1 |
| 500 | 2.2 |
| 750 | 2.3 |
| 1000 | 2.4 |
| 1250 | 2.5 |

It should be understood that a correspondence between a leakage current and a voltage in Table 1 is merely an example, and should not be construed as a particular limitation on this application.

It should be noted that, in the foregoing embodiments, an example in which a voltage value corresponding to a leakage current of 0 mA is 2.0 V is used. During actual calibration, a voltage value corresponding to a leakage current of 0 mA is determined based on a specific case.

For example, it is assumed that the leakage current transformer 1 outputs a voltage value of 1.7 V when a leakage current captured by the leakage current transformer 1 is 0 mA, and the leakage current transformer 2 outputs a voltage value of 1.8 V when a leakage current captured by the leakage current transformer 2 is 0 mA. During actual calibration, a voltage output by the calibration circuit may be any value. For example, the voltage output by the calibration circuit is 2.0 V, and a leakage current corresponding to the 2.0 V is 0 mA.

For example, it is assumed that the leakage current transformer 1 outputs a voltage value of 1.9 V when a leakage current captured by the leakage current transformer 1 is 0 mA, and the leakage current transformer 2 outputs a voltage value of 2.1 V when a leakage current captured by the leakage current transformer 2 is 0 mA. During actual calibration, a voltage output by the calibration circuit may be any value. For example, the voltage output by the calibration circuit is 2.0 V, and a leakage current corresponding to 2.0 V is 0 mA.

In this embodiment of this application, that the calibration circuit calibrates an output value of each first voltage sampling circuit during initial operation of the power conversion device may be understood as that the calibration circuit calibrates an output value of each first voltage sampling circuit when the power conversion device is delivered out of a factory, or the calibration circuit calibrates an output value of each first voltage sampling circuit during each time of operation of the power conversion device.

In this embodiment of this application, there is a deviation between a leakage current captured by each leakage current transformer and a corresponding voltage value. Even if leakage current transformers capture a same leakage current, output voltage values may still be inconsistent. Therefore, in this embodiment of this application, the calibration circuit is designed. Each calibration circuit is configured to: during initial operation of the power conversion device, make output values of all the first voltage sampling circuits consistent when an input value of each leakage current transformer is a preset value. This can reduce a deviation, and help the power conversion device accurately obtain a leakage current of each power converter and a sum of all leakage currents. Further, this can improve accuracy of protecting the power conversion device.

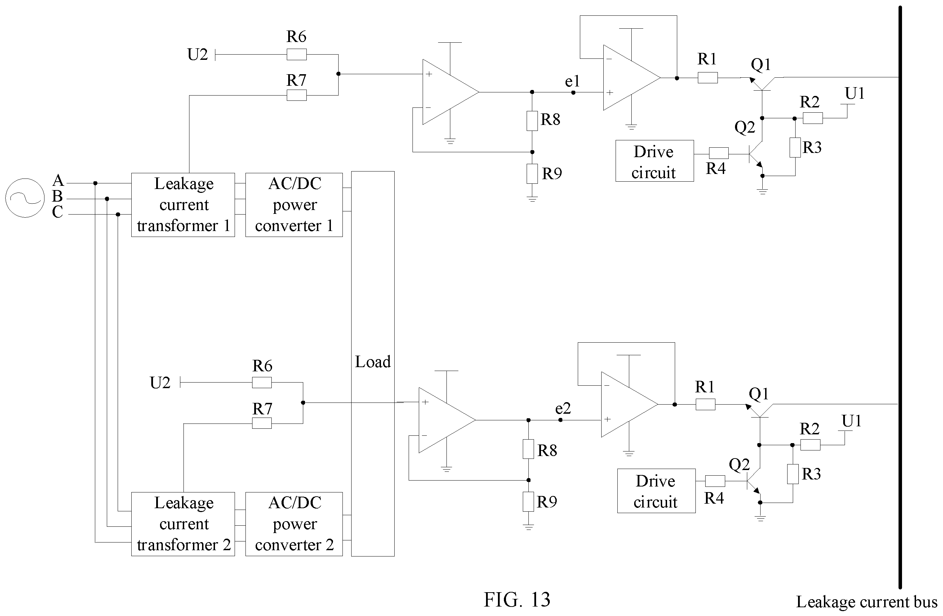

FIG. 13 is a diagram of still another power conversion device according to an embodiment of this application.

In an embodiment, a calibration circuit includes a second resistor R6, a third resistor R7, a fourth resistor R8, a fifth resistor R9, a third operational amplifier, and a second voltage source U2.

A non-inverting input end of the third operational amplifier is connected to the second voltage source through the second resistor. The non-inverting input end of the third operational amplifier is connected to a leakage current transformer through the third resistor. One end of the fourth resistor is connected to an output end of the third operational amplifier. The other end of the fourth resistor is grounded through the fifth resistor. An inverting input end of the third operational amplifier is connected to a connection point between the fourth resistor and the fifth resistor.

In this embodiment of this application, resistances of the four resistors may be equal or unequal. In a possible scenario, resistances of the second resistor R6 and the third resistor R7 are equal, and resistances of the fourth resistor R8 and the fifth resistor R9 are equal. Alternatively, a difference between resistances of the second resistor R6 and the third resistor R7 is less than a preset value, and a difference between resistances of the fourth resistor R8 and the fifth resistor R9 is less than a preset value, where the preset value may be set randomly.

In this embodiment of this application, an example in which a voltage value corresponding to a leakage current of 0 mA is 2.0 V is still used. When a voltage output by a leakage current transformer 1 is 1.7 V, a second voltage source U2 associated with the leakage current transformer 1 may output a voltage of 0.3 V Therefore, a voltage at the non-inverting input end of the third operational amplifier is 2.0 V When a voltage captured by a leakage current transformer 2 is 1.8 V, a second voltage source U2 associated with the leakage current transformer 2 may output a voltage of 0.2 V Therefore, a voltage at the non-inverting input end of the third operational amplifier is 2.0 V

A non-inverting input end of an operational amplifier is connected to an inverting input end of the operational amplifier, and the inverting input end of the third operational amplifier is connected to the output end of the third operational amplifier. Therefore, a voltage output by the output end of the third operational amplifier is also 2.0 V In other words, when a leakage current of an AC/DC power converter captured by a leakage current transformer is 0 mA, a voltage output by the calibration circuit is 2.0 V

In this embodiment of this application, the calibration circuit includes four resistors, the third operational amplifier, and the second voltage source, and resistances of all the resistors are equal. A second voltage source connected to each leakage current transformer may provide a corresponding voltage according to a requirement, so that output values of all first voltage sampling circuits are consistent when an input value of each leakage current transformer is a preset value. This can reduce a deviation, and help the power conversion device accurately obtain a leakage current of each power converter and a sum of all leakage currents. Further, this can improve accuracy of protecting the power conversion device.

The following further describes another manner of calculating a sum of leakage currents of a plurality of power converters included in a power conversion device.

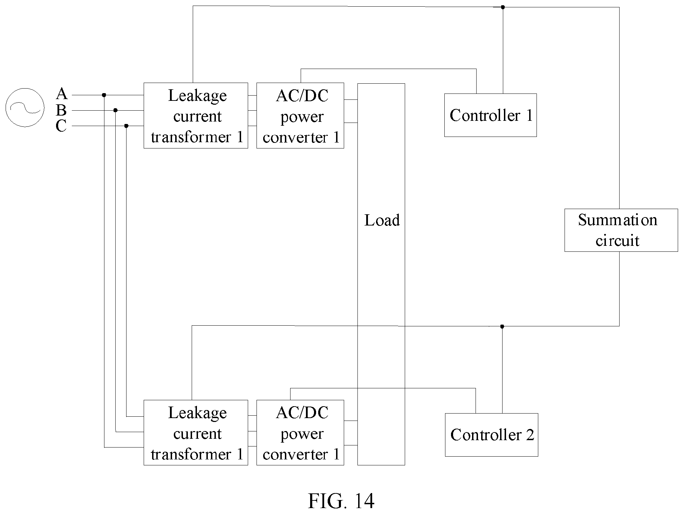

In an embodiment, as shown in FIG. 14, a leakage current sampling circuit includes a leakage current transformer, and a power conversion device further includes a summation circuit and a plurality of controllers.

The plurality of controllers are in a one-to-one correspondence with a plurality of power converters, and each controller is configured to control a corresponding power converter. The summation circuit is configured to perform summation on output values of all leakage current transformers.

Each controller is configured to: obtain an output value of a corresponding leakage current transformer and an output value of the summation circuit; and turn on or turn off a corresponding power converter based on the output value of the leakage current transformer and the output value of the summation circuit.

In this embodiment of this application, the summation circuit is configured to perform summation on the output values of all the leakage current transformers. The summation circuit may obtain an output value of a corresponding leakage current transformer from each controller, or may obtain an output value of a corresponding leakage current transformer from each leakage current transformer. Therefore, the summation circuit may perform summation based on the obtained output value of each leakage current transformer.

Because each controller is connected to the summation circuit, each controller may obtain the output value of the summation circuit, and each controller may obtain an output value of a corresponding leakage current transformer. Therefore, each controller may turn on or turn off a corresponding power converter based on the output value of the leakage current transformer and the output value of the summation circuit.

For example, as shown in FIG. 14, it is assumed that a voltage value corresponding to a leakage current of 0 mA is 2.0 V, and each time the leakage current increases by 250 mA, the voltage value increases by 0.1 V If an output value output by a leakage current transformer 1 is 2.1 V and an output value output by a leakage current transformer 2 is 2.2 V, a controller 1 may learn that a leakage current of an AC/DC power converter 1 is 250 mA, and a controller 2 may learn that a leakage current of an AC/DC power converter 2 is 500 mA. The summation circuit may obtain the leakage currents of the two AC/DC power converters and perform summation. Therefore, in addition to the leakage current of the AC/DC power converter 1, the controller 1 may further obtain a leakage current of 750 mA output by the summation circuit, so that the controller 1 can control turn-on or turn-off of the AC/DC power converter 1 based on the obtained leakage current of the AC/DC power converter 1 and the leakage current of 750 mA output by the summation circuit. In addition to the leakage current of the AC/DC power converter 2, the controller 2 may further obtain a leakage current of 750 mA output by the summation circuit, so that the controller 2 can control turn-on or turn-off of the AC/DC power converter 2 based on the obtained leakage current of the AC/DC power converter 2 and the leakage current of 750 mA output by the summation circuit.

In this embodiment of this application, the summation circuit may be a hardware adder, a summation operator, or the like.

It should be understood that the summation circuit in this embodiment of this application may alternatively be designed as a system controller, and the system controller performs summation on the output values of all the leakage current transformers.

In this embodiment of this application, the summation circuit in the power conversion device performs summation on output values of a plurality of leakage current transformers, so that each controller can control turn-on or turn-off of a corresponding power converter based on the output value of the leakage current transformer and the output value of the summation circuit. In this way, the power conversion device can be protected. In addition, in this embodiment of this application, the summation circuit performs summation on the output values of all the leakage current transformers, and the summation circuit has a simple design, is easy to implement, and has high operation efficiency.

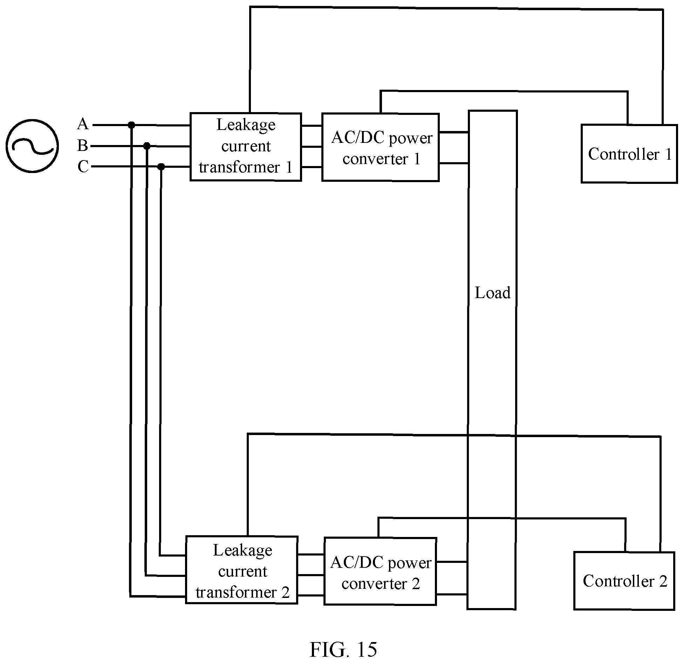

In an embodiment, as shown in FIG. 15, a leakage current sampling circuit includes a leakage current transformer, and a power conversion device further includes a plurality of controllers.

The plurality of controllers are in a one-to-one correspondence with a plurality of power converters, and each controller is configured to control a corresponding power converter.

Each controller is configured to: obtain output values of all leakage current transformers, and calculate a sum of the output values of all the leakage current transformers; and turn on or turn off a corresponding power converter based on the output values of the leakage current transformers and the sum of the output values of all the leakage current transformers.

In this embodiment of this application, the power conversion device includes the plurality of controllers, and each of the plurality of controllers may obtain the output values of all the leakage current transformers. Therefore, each controller may calculate a sum of the output values of all the leakage current transformers in the power conversion device.

Specifically, each controller may obtain an output value of a corresponding leakage current transformer, and broadcast the obtained output value of the corresponding leakage current transformer, so that each controller can further obtain an output of another leakage current transformer in the power conversion device in addition to an output value of a leakage current transformer corresponding to the controller.

For example, as shown in FIG. 15, it is assumed that a voltage value corresponding to a leakage current of 0 mA is 2.0 V, and each time the leakage current increases by 250 mA, the voltage value increases by 0.1 V If an output value output by a leakage current transformer 1 is 2.1 V and an output value output by a leakage current transformer 2 is 2.2 V, a controller 1 may learn that a leakage current of an AC/DC power converter 1 is 250 mA, and a controller 2 may learn that a leakage current of an AC/DC power converter 2 is 500 mA. The controller 1 and the controller 2 may respectively broadcast the leakage currents of the AC/DC power converters that are obtained by the controller 1 and the controller 2. Therefore, in addition to the leakage current of the AC/DC power converter 1, the controller 1 may further obtain the leakage current of 500 mA of the AC/DC power converter 2. Therefore, the controller 1 may learn, through calculation, that a sum of the leakage currents of the two AC/DC power converters included in the power conversion device is 750 mA. In addition to the leakage current of the AC/DC power converter 2, the controller 2 may further obtain the leakage current of 250 mA of the AC/DC power converter 1. Therefore, the controller 2 may learn, through calculation, that a sum of the leakage currents of the two AC/DC power converters included in the power conversion device is 750 mA.

In this embodiment of this application, a manner of broadcasting, by each controller, a leakage current of a power converter obtained by the controller is not specifically limited. For example, the leakage current may be broadcast through wired communication or wireless communication. The wired communication may include a CAN. The wireless communication may include Wi-Fi, Bluetooth, and the like.

It should be noted that, in this embodiment of this application, a leakage current of a power converter may not be broadcast by a corresponding controller, but may be performed by a corresponding leakage current sampling circuit.

In this embodiment of this application, each controller may obtain the output values of all the leakage current transformers and calculate the sum of the output values of all the leakage current transformers, so that each controller can control turn-on or turn-off of a corresponding power converter based on the output values of the leakage current transformers the sum of the output values of all the leakage current transformers. In this way, the power conversion device can be protected. In addition, in this embodiment of this application, each controller independently calculates the sum of the output values of all the leakage current transformers. To be specific, each controller independently performs a summation operation, without affecting each other.

In the foregoing embodiments, a leakage current sampling circuit is located on an input side of a power converter. A location of a leakage current sampling circuit is not specifically limited in embodiments of this application.

In an embodiment, each leakage current sampling circuit is located at an output end of a power converter; or each leakage current sampling circuit is located at an input end of a power converter; or some leakage current sampling circuits of a plurality of leakage current sampling circuits each are located at an input end of a power converter, and a leakage current sampling circuit other than the some leakage current sampling circuits is located at an output end of a power converter.

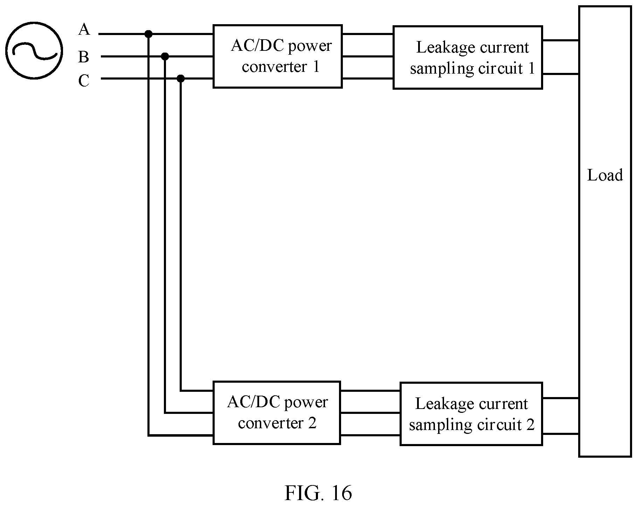

FIG. 16 is a diagram of still another power conversion device according to an embodiment of this application. As shown in FIG. 16, a leakage current sampling circuit 1 is located at an output end of a power converter 1, and a leakage current sampling circuit 2 is located at an output end of the power converter 2. A specific operation principle of the leakage current sampling circuit is similar to that in the foregoing embodiments. Details are not described herein again.

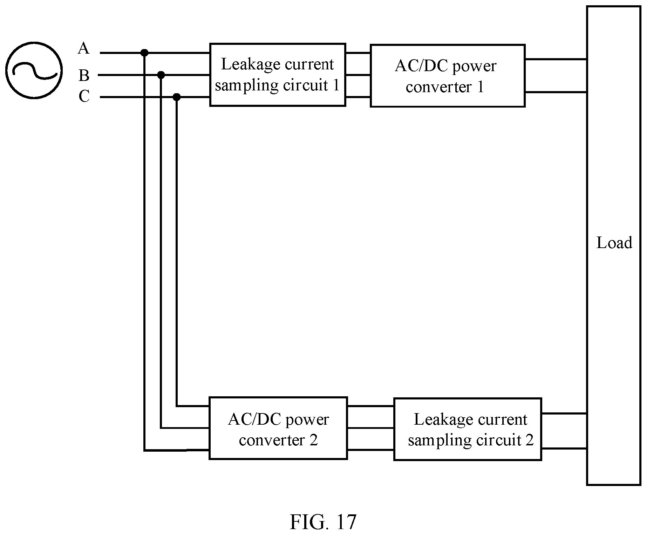

FIG. 17 is a diagram of still another power conversion device according to an embodiment of this application. As shown in FIG. 17, a leakage current sampling circuit 1 is located at an input end of a power converter 1, and a leakage current sampling circuit 2 is located at an output end of the power converter 2. A specific operation principle of the leakage current sampling circuit is similar to that in the foregoing embodiments. Details are not described herein again.

This application further provides a charging pile. The charging pile includes the power conversion device in any one of the foregoing embodiments, and each power converter is an AC-DC power converter.

In an embodiment, the charging pile further includes a direct current bus and a plurality of DC-DC power converters, and the plurality of AC-DC power converters are connected to the plurality of DC-DC power converters through the direct current bus.

For a design and a specific protection process for the power conversion device in the charging pile, refer to related content in the foregoing embodiments. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion device, wherein the power conversion device comprises a plurality of power converters and a plurality of leakage current sampling circuits, an input end of each power converter is configured to connect to a power supply, and an output end of each power converter is configured to connect to a load;
the plurality of power converters are connected in parallel, the plurality of leakage current sampling circuits are in a one-to-one correspondence with the plurality of power converters, and each leakage current sampling circuit is configured to sample a leakage current of a corresponding power converter; and
the power conversion device is configured to:
when a sum of leakage currents of the plurality of power converters is greater than a first current threshold, turn off at least some of first power converters, so that a sum of leakage currents of the plurality of power converters is less than or equal to the first current threshold, wherein the first power converter is a power converter whose leakage current is greater than a second current threshold among the plurality of power converters, wherein
the first current threshold is a maximum leakage current allowed by the power conversion device, and the second current threshold is a maximum leakage current allowed by the first power converter.

2. The power conversion device according to claim 1, wherein the power conversion device is further configured to:
when a sum of leakage currents of the plurality of power converters is less than or equal to the first current threshold, turn off the first power converter; or
when a sum of leakage currents of the plurality of power converters is less than or equal to the first current threshold, skip turning off the first power converter.

3. The power conversion device according to claim 1 or 2, wherein the power conversion device further comprises a leakage current bus and an equalization circuit, the leakage current sampling circuit comprises a leakage current transformer, the leakage current transformer is configured to capture a leakage current of a corresponding power converter, an input end of the equalization circuit is connected to a plurality of leakage current transformers, an output end of the equalization circuit is connected to the leakage current bus, and the equalization circuit is configured to average output values of the plurality of leakage current transformers and then output an average value; and
the power conversion device is configured to:
calculate a product of a leakage current corresponding to a voltage of the leakage current bus and a quantity of the plurality of power converters, to obtain the sum of the leakage currents of the plurality of power converters.

4. The power conversion device according to claim 3, wherein the equalization circuit comprises a plurality of equalization resistors and a plurality of switch circuits, and each leakage current transformer is connected to the leakage current bus through one equalization resistor and one switch circuit that are connected in series.

5. The power conversion device according to claim 4, wherein the equalization circuit further comprises a plurality of first operational amplifiers, a non-inverting input end of each first operational amplifier is connected to a corresponding leakage current transformer, an inverting input end of each first operational amplifier is connected to an output end of the first operational amplifier, an output end of each first operational amplifier is connected to one end of the equalization resistor, and the other end of the equalization resistor is connected to the leakage current bus through the switch circuit.

6. The power conversion device according to claim 4 or 5, wherein the switch circuit comprises two switching transistors, a current-limiting resistor, a first voltage source, and a drive circuit, one switching transistor is connected in series to a connection line connecting the equalization resistor and the leakage current bus, a base of the switching transistor is grounded through the other switching transistor, the first voltage source is connected to a connection point between the two switching transistors through the current-limiting resistor, and the drive circuit is connected to a base of the other switching transistor.

7. The power conversion device according to claim 6, wherein the switch circuit further comprises a voltage-division resistor, one end of the voltage-division resistor is connected to an emitter of the other switching transistor, and the other end of the voltage-division resistor is connected to a connection point between the current-limiting resistor and a collector of the other switching transistor.

8. The power conversion device according to any one of claims 3 to 7, wherein the power conversion device further comprises a plurality of controllers, the leakage current sampling circuit further comprises a plurality of voltage sampling circuits, and the plurality of voltage sampling circuits comprise a first voltage sampling circuit and a plurality of second voltage sampling circuits;
the plurality of controllers are in a one-to-one correspondence with the plurality of power converters, and each controller is configured to control a corresponding power converter;
input ends of the plurality of first voltage sampling circuits are connected to the leakage current bus, an output end of each first voltage sampling circuit is connected to the controller in a one-to-one correspondence, and each first voltage sampling circuit is configured to capture a voltage value of the leakage current bus; and
an input end of each second voltage sampling circuit is connected to a connection point between a corresponding leakage current transformer and the equalization circuit, an output end of each second voltage sampling circuit is connected to the controller in a one-to-one correspondence, and each second voltage sampling circuit is configured to capture a voltage value at a connection point between a corresponding leakage current transformer and the equalization circuit.

9. The power conversion device according to claim 8, wherein each voltage sampling circuit comprises a second operational amplifier, a first resistor, and a filter capacitor; and
a non-inverting input end of the second operational amplifier is an input end of the voltage sampling circuit, an inverting input end of the second operational amplifier is connected to an output end of the second operational amplifier, the output end of the second operational amplifier is connected to one end of the first resistor, the other end of the first resistor is connected to one end of the filter capacitor, the other end of the filter capacitor is grounded, and a connection point between the other end of the first resistor and the filter capacitor is an output end of the voltage sampling circuit.

10. The power conversion device according to claim 8 or 9, wherein the leakage current sampling circuit further comprises a calibration circuit, the calibration circuit is connected in series between the leakage current transformer and the equalization circuit, and during initial operation of the power conversion device, each calibration circuit is configured to make output values of all the first voltage sampling circuits consistent when an input value of each leakage current transformer is a preset value.

11. The power conversion device according to claim 10, wherein the calibration circuit comprises a second resistor, a third resistor, a fourth resistor, a fifth resistor, a third operational amplifier, and a second voltage source; and
a non-inverting input end of the third operational amplifier is connected to the second voltage source through the second resistor, the non-inverting input end of the third operational amplifier is connected to the leakage current transformer through the third resistor, one end of the fourth resistor is connected to an output end of the third operational amplifier, the other end of the fourth resistor is grounded through the fifth resistor, and an inverting input end of the third operational amplifier is connected to a connection point between the fourth resistor and the fifth resistor.

12. The power conversion device according to claim 1 or 2, wherein the leakage current sampling circuit comprises a leakage current transformer, and the power conversion device further comprises a summation circuit and a plurality of controllers;
the plurality of controllers are in a one-to-one correspondence with the plurality of power converters, and each controller is configured to control a corresponding power converter;
the summation circuit is configured to perform summation on output values of all leakage current transformers; and
each controller is configured to:
obtain an output value of a corresponding leakage current transformer and an output value of the summation circuit; and
turn on or turn off a corresponding power converter based on the output value of the leakage current transformer and the output value of the summation circuit.

13. The power conversion device according to claim 1 or 2, wherein the leakage current sampling circuit comprises a leakage current transformer, and the power conversion device further comprises a plurality of controllers;
the plurality of controllers are in a one-to-one correspondence with the plurality of power converters, and each controller is configured to control a corresponding power converter; and
each controller is configured to:
obtain output values of all leakage current transformers, and calculate a sum of the output values of all the leakage current transformers; and
turn on or turn off a corresponding power converter based on the output values of the leakage current transformers and the sum of the output values of all the leakage current transformers.

14. A charging pile, wherein the charging pile comprises the power conversion device according to any one of claims 1 to 13, and each power converter is an AC-DC power converter.

15. The charging pile according to claim 14, wherein the charging pile further comprises a direct current bus and a plurality of DC-DC power converters, and the plurality of AC-DC power converters are connected to the plurality of DC-DC power converters through the direct current bus.
